(19) **Europäisches Patentamt / European Patent Office / Office européen des brevets**

(11) **EP 4 707 867 A1**

(12) **EUROPEAN PATENT APPLICATION**
published in accordance with Art. 153(4) EPC

(43) Date of publication:
**11.03.2026 Bulletin 2026/11**

(21) Application number: **24823560.8**

(22) Date of filing: **24.04.2024**

(51) International Patent Classification (IPC):
**G01S 19/01** (2010.01)    **G06F 3/0481** (2022.01)
**H04B 7/185** (2006.01)

(52) Cooperative Patent Classification (CPC):
**G01S 19/01; G06F 3/0481; H04B 7/185**

(86) International application number:
**PCT/KR2024/005556**

(87) International publication number:
**WO 2024/258039 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 KR 20230076941
13.07.2023 KR 20230091233**

(71) Applicant: **Samsung Electronics Co., Ltd.
Suwon-si, Gyeonggi-do 16677 (KR)**

(72) Inventors:
• **PARK, Sungmin**
  **Suwon-si, Gyeonggi-do 16677 (KR)**
• **KWON, Dongki**
  **Suwon-si, Gyeonggi-do 16677 (KR)**
• **KIM, Hyunil**
  **Suwon-si, Gyeonggi-do 16677 (KR)**
• **LEE, Junghun**
  **Suwon-si, Gyeonggi-do 16677 (KR)**
• **HAN, Yonggil**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE AND METHOD FOR IDENTIFYING POSITION OF SATELLITE**

(57)     This electronic device may comprise: a memory for storing instructions; a display; a communication circuit; and at least one processor. When executed individually or collectively by the at least one processor, the instructions can cause the electronic device to: display, on the basis of identifying an azimuth angle of the electronic device with respect to a satellite outside a first range, a first screen for adjusting the azimuth angle to be located within the first range; while the first screen is displayed, display, on the basis that the azimuth angle outside the first range is changed to be within the first range, a second screen, which is changed from the first screen and guides the electronic device to be fixed; and, while the second screen is displayed, display, on the basis of identifying an elevation angle of the electronic device with respect to the satellite outside a second range, a third screen, which is changed from the second screen and is for adjusting the elevation angle to be located within the second range.

FIG. 2

## Description

### [Technical Field]

The following descriptions relate to an electronic device and a method for identifying a position of a satellite.

### [Background Art]

Recently, a spread of various types of electronic devices, such as a smartphone, a tablet personal computer (PC), a wireless earphone, and a smart watch, and the like, is expanding. Such an electronic device may include a communication circuit connectable to a satellite. The electronic device may provide an emergency rescue service using a connection with the satellite.

### [Disclosure]

### [Technical Solution]

An electronic device may comprise memory, comprising one or more storage media, storing instructions. The electronic device may comprise a display. The electronic device may comprise a communication circuit. The electronic device may comprise at least one processor comprising processing circuitry. The instructions, when executed by the at least one processor individually or collectively, cause the electronic device to display, via the display , a first screen for adjusting an azimuth angle of the electronic device with respect to a satellite to be located within a first range based on identifying the azimuth angle out of the first range, in a state in which a software application for connecting with the satellite is executed via the communication circuit. The instructions, when executed by the at least one processor individually or collectively, cause the electronic device to, based on changing the azimuth angle out of the first range to be within the first range in a state in which the first screen is displayed, display, via the display, a second screen for guiding to hold the electronic device, wherein the second screen is changed from the first screen. The instructions, when executed by the at least one processor individually or collectively, cause the electronic device to, based on identifying an elevation angle of the electronic device with respect to the satellite out of a second range in a state in which the second screen is displayed, display, via the display, a third screen for adjusting the elevation angle to be located within the second range, wherein the third screen is changed from the second screen.

An electronic device may comprise a display. The electronic device may comprise a sensor. The electronic device may comprise a communication circuit. The electronic device may comprise a processor. The processor may be configured to display, via the display, a screen for adjusting an azimuth angle of the electronic device identified based on the sensor with respect to a satellite to be located within a first range, in a state in which a software application for connecting with the satellite is executed via the communication circuit. The processor may be configured to display, via the display, another screen for adjusting an elevation angle to be located within a second range, the other screen being changed from the screen, based on identifying that the azimuth angle out of the first range is changed to within the first range and the elevation angle of the electronic device with respect to the satellite is out of the second range in a state in which the screen is displayed.

### [Description of the Drawings]

FIG. 1 is a block diagram of an electronic device in a network environment according to various embodiments.
FIG. 2 illustrates an example of a method for aligning a direction of an electronic device with a position of a satellite.
FIG. 3 illustrates an exemplary block diagram of an electronic device.
FIG. 4 illustrates an example of a network environment including an electronic device and a satellite.
FIG. 5 illustrates an example of an operation flow of a method for aligning a direction of an electronic device with a position of a satellite.
FIGS. 6A to 6C illustrate an example of a relationship between a direction of a sensor and a direction of an antenna.
FIGS. 7A to 7D illustrate examples of a method of identifying a direction of an electronic device.
FIGS. 8A to 8D illustrate examples of a method of adjusting an azimuth angle of an electronic device with respect to a satellite to be located within a first range.
FIG. 9 illustrates an example of a method of displaying screens for aligning a direction of an electronic device with a position of a satellite based on quality of a signal.
FIGS. 10A to 10C illustrate examples of a method of adjusting an elevation angle of an electronic device with respect to a satellite to be located within a second range.

FIG. 11 illustrates an example of screens according to whether a connection between an electronic device and a satellite is established.

FIG. 12 illustrates an example of a method of adjusting a first range with respect to an azimuth angle.

FIG. 13 illustrates an operation flow of a method for displaying screens for aligning a direction of an electronic device with a position of a satellite.

FIGS. 14A and 14B illustrate an example of a first screen displayed by an electronic device.

FIGS. 15A and 15B illustrate an example of a second screen displayed by an electronic device.

FIGS. 16A and 16B illustrate an example of a third screen displayed by an electronic device.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

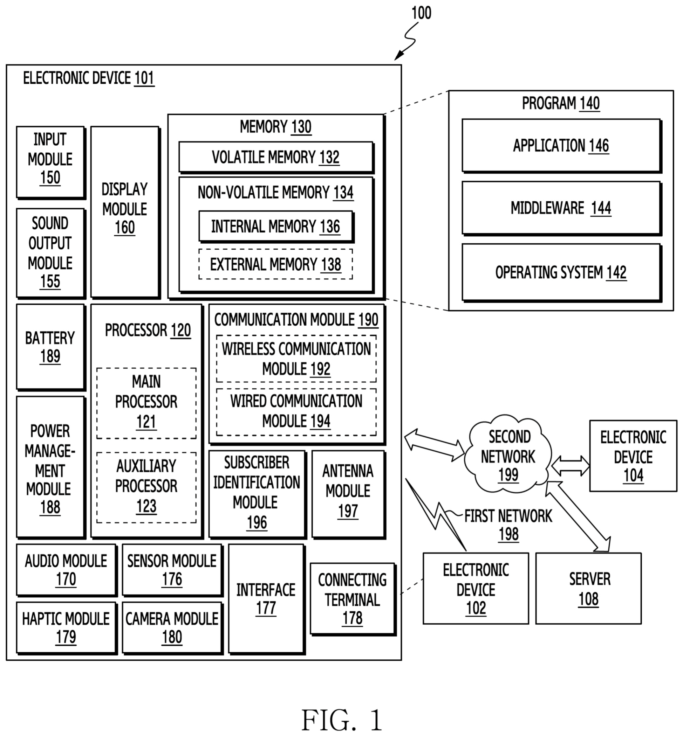

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The user of the electronic device 101 may use the emergency rescue service by transmitting a message or by phone to an emergency number. In other words, the emergency rescue service may be provided in an area or a situation where the electronic device 101 may use a wireless communication network (e.g., a 4G network, a 5G network, or WiFi). However, in an area or a situation where the wireless communication network is not available, the electronic device 101 may not provide the emergency rescue service. In order to provide the emergency rescue service even in the area or the situation where the wireless communication network is not available, communication through a satellite (hereinafter, satellite communication) may be used. The electronic device 101 may provide the emergency rescue service through the satellite communication.

The electronic device 101 may establish a connection with the satellite to perform the satellite communication. For example, the electronic device 101 may connect to the satellite through a communication circuit (e.g., the communication module 190 of FIG. 1) for communicating with the satellite. The communication circuit may represent a module for emitting a signal provided from the processor 120 of the electronic device 101. For example, the processor 120 may be referred to as a modem. The electronic device 101 may identify a strength of a signal radiated through the communication circuit, through a sensor (e.g., the sensor module 176 of FIG. 1). In order for the electronic device 101 to perform the satellite communication, the strength may be required to be greater than or equal to a reference strength. However, since the signal is radiated, it may be limited for the electronic device 101 to accurately identify a direction in which the strength is strongest through the sensor. In addition, since a direction (e.g., a direction in which a specific surface (e.g., a front surface on which the display 160 is located) of the electronic device 101 faces) identified by the sensor does not coincide with a direction of an antenna (e.g., a direction (e.g., a direction in which the signal radiated through the antenna propagates or a direction in which a main lobe of a beam radiated through the antenna faces) of the antenna module 197 of FIG. 1) connected to the communication circuit of the electronic device 101 where the signal is radiated, aligning a direction of the electronic device 101 with a position of the satellite may be difficult.

Hereinafter, an electronic device and a method according to the present disclosure may identify an azimuth angle and an elevation angle with respect to the satellite based on the direction of the antenna with respect to a direction identified through the sensor of the electronic device 101. The electronic device and the method according to an embodiment of the present disclosure may provide a screen for adjusting the identified azimuth angle to be located within a first range. In addition, the electronic device and the method according to an embodiment of the present disclosure may provide a screen for adjusting the elevation angle to be located within a second range in a case that a connection with the satellite is not established through the azimuth angle within the first range. Accordingly, the electronic device and the method according to an embodiment of the present disclosure may improve directivity between the satellite and the electronic device by aligning the direction of the electronic device 101, in which a second direction of the antenna is considered with respect to a first direction identified through the sensor, with the position of the satellite. In addition, the electronic device and the method according to an embodiment of the present disclosure may secure stability of the connection between the satellite and the electronic device. In the electronic device and the method according to an embodiment of the present disclosure, the user of the electronic device 101 may more intuitively obtain the directivity and the stability by displaying the screen for adjusting the azimuth angle to be located within the first range and the screen for adjusting the elevation angle to be located within the second range.

The alignment may represent positioning the direction of the electronic device 101 within a reference range with the position of the satellite. For example, the reference range may include a first range for the azimuth angle of the electronic device 101 with respect to the satellite and a second range for the elevation angle of the electronic device 101 with respect to the satellite. For example, the first range may represent a range with respect to the azimuth angle based on the position of the satellite. For example, the second range may represent a range for the elevation angle based on the position of the satellite. In other words, the first range and the second range may indicate a virtual area defined based on an actual position of the satellite. However, an embodiment of the present disclosure is not limited thereto. For example, the first range may represent a range with respect to the azimuth angle based on the direction of the electronic device 101. The direction of the electronic device 101 may represent a direction identified based on the first direction of the sensor and the second direction of the antenna. For example, the second range may represent a range with respect to the elevation angle based on the direction of the electronic device 101. In other words, the first range and the second range may represent a virtual area defined based on the direction of the electronic device 101. Hereinafter, in the present disclosure, for convenience of explanation, the first range and the second range are described as reference ranges based on the position of the satellite.

For example, the azimuth angle (or the azimuth angle of the electronic device 101 with respect to the satellite) may represent a sum (or a difference) between an angle between a vector facing the direction of the electronic device 101 projected in a reference plane and a vector facing a reference direction (e.g., true north), and an angle between a vector facing the direction of the satellite projected in the reference plane and the vector facing the reference direction. For example, the azimuth angle may represent an angle between the vector facing the direction of the electronic device 101 and the vector facing the direction of the satellite. For example, the reference plane may represent a horizontal plane including the electronic device 101 and the vector facing the reference direction. For example, the reference direction may include the true north, a magnetic north, or a grid north. For example, the elevation angle (or the elevation angle of the electronic device 101 with respect to the satellite) may represent a difference between an angle between the direction of the electronic device 101 and the reference plane, and an angle between a vector facing the position of the satellite and the reference plane.

In the above example, the azimuth angle and the elevation angle are illustrated as angles used to align the direction of the electronic device 101 with the position of the satellite, but the embodiment of the present disclosure is not limited thereto. For example, the electronic device and the method according to an embodiment of the present disclosure may also use a first angle as an angle difference to the first direction defining the direction of the electronic device 101 and the position of the satellite, and a second angle as an angle difference to the first direction perpendicular to a plane including the first direction. In other words, the azimuth angle may be referred to as the first angle, and the elevation angle may be referred to as the second angle.

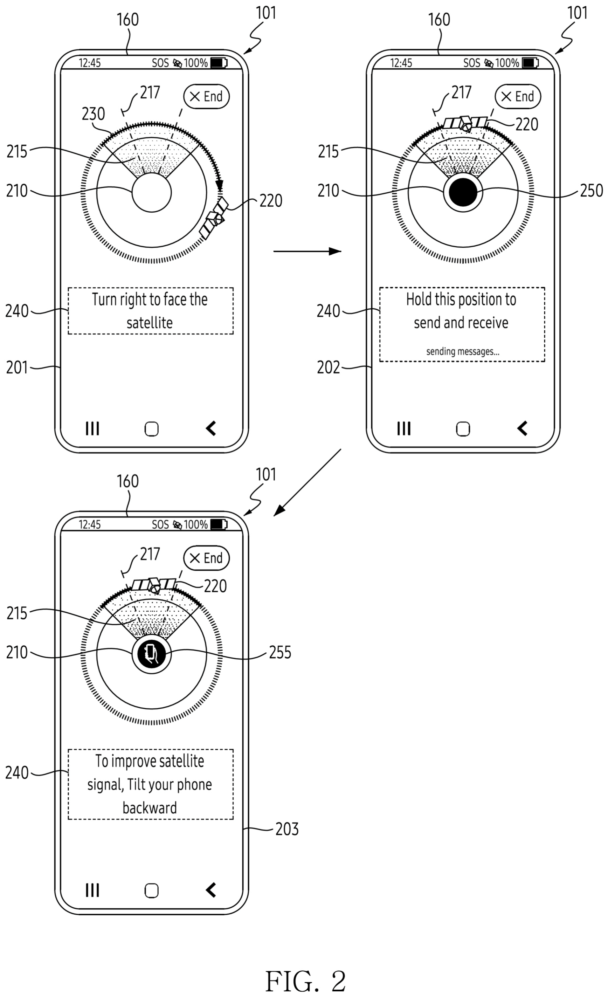

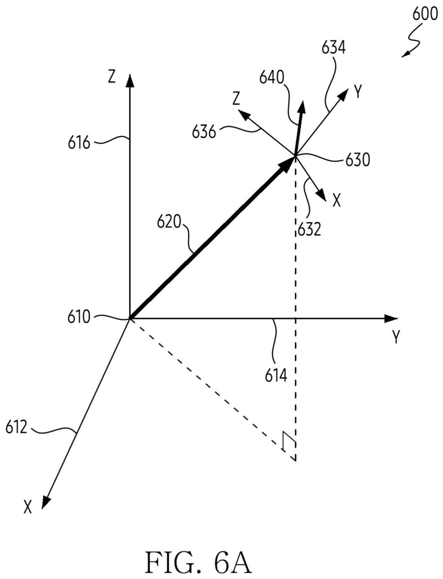

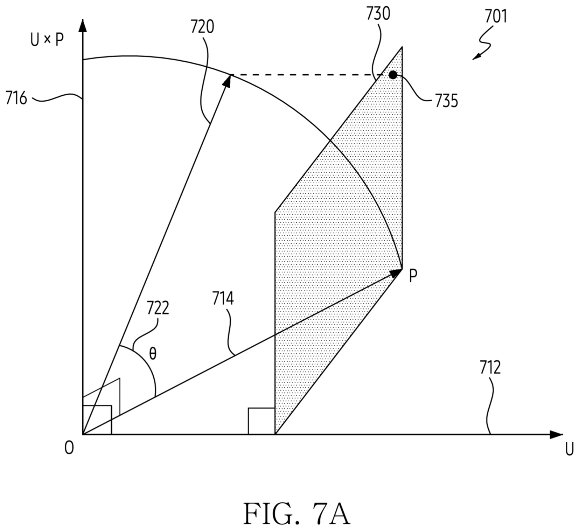

Hereinafter, FIG. 2 illustrates an example of a method for aligning the direction of the electronic device 101 with the position of the satellite. For example, the direction of the electronic device 101 may represent a direction in which the first direction identified through the sensor and the second direction of the antenna are combined. A method of identifying the direction of the electronic device 101 will be described in detail in FIGS. 6A to 6C and 7A to 7D below.

FIG. 2 illustrates an example of a method for aligning a direction of an electronic device with a position of a satellite.

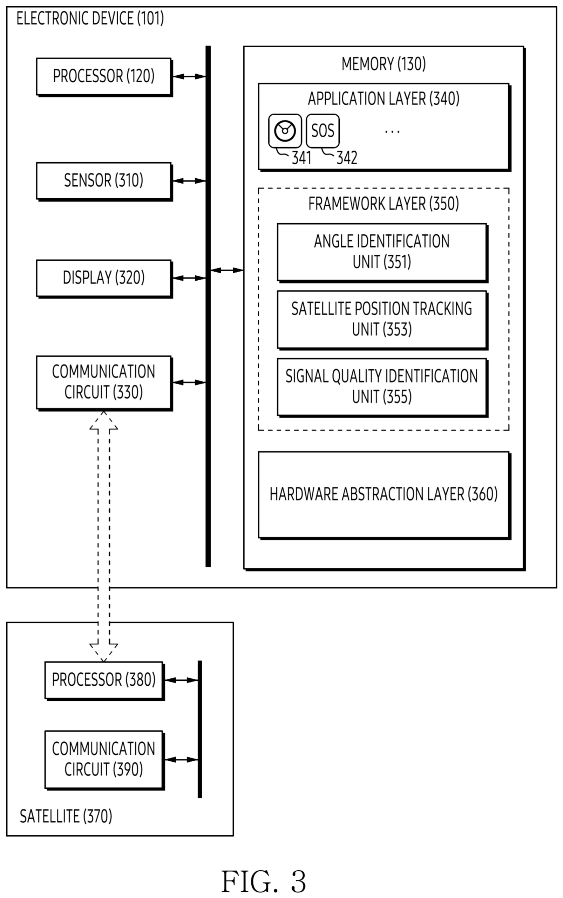

The method of FIG. 2 may be performed by the electronic device 101 of FIG. 1. For example, screens 201, 202 and 203 of FIG. 2 may be displayed through a display area of the display 160 of FIG. 1 (or a display 320 of FIG. 3). For example, display of the screens 201, 202 and 203 may be controlled by a processor 120.

Referring to FIG. 2, the electronic device 101 may display a first screen 201. For example, the electronic device 101 may display the first screen 201 through a display (e.g., the display module 160 of FIG. 1).

According to an embodiment, the electronic device 101 may execute a software application for connecting with the satellite. The software application for connecting with the satellite may be referred to as a software application for satellite communication or a satellite communication application. For example, the electronic device 101 may execute the software application based on at least a portion of an input of a user. For example, each of the screens 201, 202 and 203 may be referred to as a user interface (UI) for the software application.

According to an embodiment, the electronic device 101 may identify a position of the satellite in a state in which the software application is executed. For example, the electronic device 101 may identify the position of the satellite through a software development kit (SDK) to support a satellite communication service. The SDK is merely an example for convenience of explanation, and an embodiment of the present disclosure is not limited thereto. For example, the position of the satellite may be identified through an application programming interface (API) called by the software application. The API may be included in the SDK. For example, the position of the satellite may be identified (or defined) based on a vector facing a direction of the satellite.

According to an embodiment, the electronic device 101 may identify a difference between the identified position of the satellite and the direction of the electronic device 101. For example, the electronic device 101 may identify the direction of the electronic device 101. For example, the electronic device 101 may identify a first direction identified by a sensor included in the electronic device 101 and a second direction in which an antenna of the electronic device 101 indicates. The second direction (or a direction in which the first direction and the second direction are combined) in which the first direction is considered may be referred to the direction of the electronic device 101. For example, the electronic device 101 may identify an azimuth angle and an elevation angle of the electronic device 101 with respect to the satellite based on the direction.

According to an embodiment, the electronic device 101 may identify whether the azimuth angle is within a first range. For example, the electronic device 101 may identify whether the azimuth angle is included in a first range 217. For example, the first range 217 may represent a reference range for the azimuth angle for the electronic device 101 to establish a connection (or communication) with the satellite. In other words, in a case that the azimuth angle is located within the first range 217, the electronic device 101 may be relatively likely to establish the connection with the satellite.

For example, the first range 217 may be identified based on information related to the antenna of the electronic device 101. The antenna may be connected to a communication circuit (e.g., the communication module 190 of FIG. 1) of the electronic device 101 and may include an antenna for communicating with the satellite. For example, the information may include at least one of the number of antennas, directivity of the antenna, a strength of a signal radiated through the antenna, or a frequency band of the signal. Hereinafter, in the present disclosure, for convenience of explanation, a case in which a length of the first range 217 is 40° (e.g., -20° to 20°) is described as an example. For example, in a case that the first range 217 is from -20° to 20°, a median value of 0° may represent a direction in which the satellite is actually located. However, the embodiment of the present disclosure is not limited thereto. The length may be referred to as a size.

According to an embodiment, the electronic device 101 may display the first screen 201 based on identifying that the azimuth angle is outside the first range 217. For example, the first screen 201 may represent a screen for adjusting the azimuth angle outside the first range 217 to be located within the first range 217. For example, the first screen 201 may include a visual object 210 representing a reference position. For example, the first screen 201 may include a visual object 215 extending from the reference position and representing a designated range including the first range 217. The visual object 215 representing the designated range may be displayed in a fixed state on the first screen 201. For example, even if the electronic device 101 moves in a direction indicated through a visual object 230 and a visual object 240, the visual object 215 may be displayed in a fixed state to face a specific portion (e.g., an upper portion) of the display of the electronic device 101. This is because the designated range and the first range 217 are areas identified based on an actual position of the satellite. In the first screen 201, a visual object 220 representing a relative position of the satellite may move according to movement of the electronic device 101. The designated range may represent an area wider than the first range 217. In other words, the first range 217 may represent a virtual area included in the designated range and not displayed on the first screen 201. However, the embodiment of the present disclosure is not limited thereto. For example, the visual object 215 may further include another visual object representing the first range 217. For example, the first screen 201 may include the visual object 220 representing the relative position of the satellite with respect to the electronic device 101. In the first screen 201, the relative position of the satellite may be located outside an area of the visual object 215 representing the designated range. For example, the first screen 201 may include the visual object 230 including an area of the designated range and extending to the visual object 220 within a circle in which the visual object 220 moves. The visual object 230 may represent a direction for changing the position of the satellite to within the designated range (or the first range 217). For example, referring to the first screen 201, in a case that the visual object 220 representing the position of the satellite is displayed in a right part outside the designated range, the visual object 230 may include an indicator pointing to the right (or clockwise). In other words, the visual object 230 may represent a visual object for intuitively displaying a distance between the visual object 215 representing the designated range and the visual object 220 representing the position of the satellite. For example, the first screen 201 may include the visual object 240 including text for guiding movement in the direction. In an example of FIG. 2, the visual object 240 of the first screen 201 may include text (e.g., Turn right to face the satellite) indicating to rotate to the right (or clockwise).

Although not illustrated in FIG. 2, in response to execution of the software application, the electronic device 101 may display an initial screen. For example, the electronic device 101 may identify the position of the satellite in a state in which the initial screen is displayed and identify whether the azimuth angle of the satellite of the electronic device 101 is within the first range 217. For example, the initial screen may include a screen that performs setting for performing the connection with the satellite through the software application. Alternatively, the initial screen may include a screen including remaining visual objects other than the visual object 240 among visual objects included in the first screen 201. In this case, the initial screen may include another visual object including different text from the visual object 240.

Referring to FIG. 2, the electronic device 101 may display the second screen 202. For example, the electronic device 101 may display the second screen 202 through the display (e.g., the display module 160 of FIG. 1). The second screen 202 may represent a screen for guiding to hold an orientation of the electronic device 101. For example, the electronic device 101 may display the second screen 202 in a case that the visual object 220 representing the relative position of the satellite is located within the first range 217 of the visual object 215 representing the designated range according to movement of the electronic device 101, in a state in which the first screen 201 is displayed. The visual object 220 being located within the first range 217 according to the movement may represent that the azimuth angle is located within the first range 217. In the example of FIG. 2, the movement may include rotation facing the right (or clockwise).

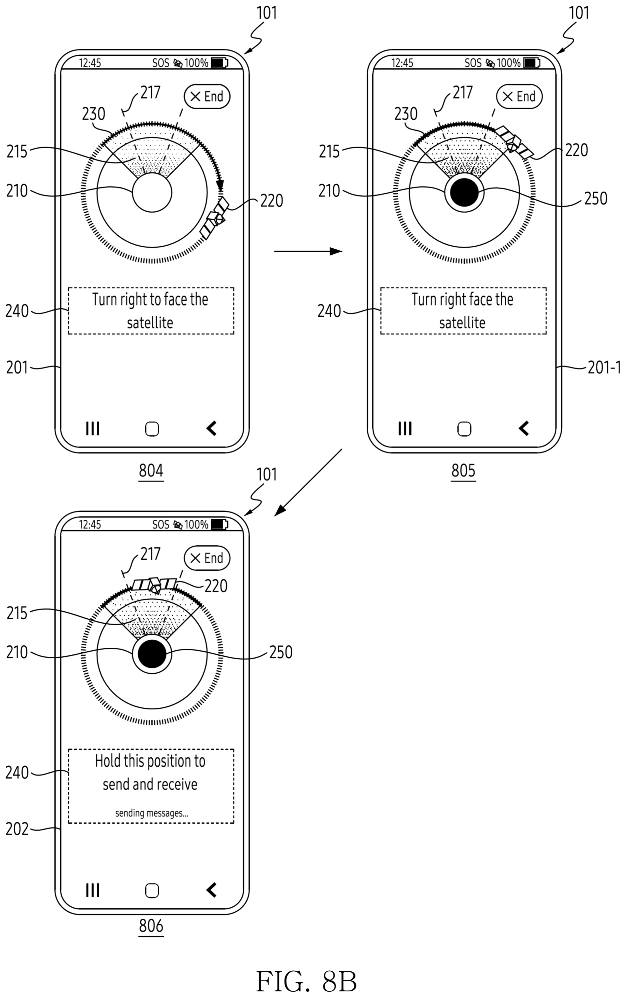

Although omitted in FIG. 2, as illustrated in FIG. 8B below, in a case that the azimuth angle is located within the designated range according to the movement of the electronic device 101, the electronic device 101 may display the first screen 201 of FIG. 2 further including a visual object (e.g., a visual object 250 of FIG. 8B) representing that the azimuth angle is located within the designated range. In addition, according to an embodiment, a brightness of the visual object 215 representing the designated range may be identified based on the visual object 220 representing the relative position of the satellite. For example, the brightness of the visual object 215 may become brighter as the visual object 220 representing the relative position of the satellite approaches within the first range 217. For example, the brightness may be a first brightness in a case that the visual object 220 is located outside the designated range of the visual object 215. In addition, the brightness may be a second brightness brighter than the first brightness in a case that the visual object 220 is within the designated range of the visual object 215 and is located outside the first range 217. In addition, the brightness may be a third brightness brighter than the second brightness in a case that the visual object 220 is located within the first range 217. In the above-described example, an example of changing the brightness of the visual object 215 is described, but the embodiment of the present disclosure is not limited thereto. According to an embodiment, the electronic device 101 may change the number of pixels of the display used to display the visual object 215 based on the visual object 220 representing the relative position of the satellite. For example, the number of pixels used to display the visual object 215 may increase as the visual object 220 approaches within the first range 217. The increase in the number may represent that the visual object 215 is displayed thickly.

According to an embodiment, the electronic device 101 may display the second screen 202 based on the azimuth angle outside the first range 217 being changed to within the first range 217 according to the movement in a state in which the first screen 201 is displayed. For example, the electronic device 101 may display the second screen 202 changed from the first screen 201. For example, the second screen 202 may represent a screen for guiding to hold an orientation of the electronic device 101. The orientation of the electronic device 101 may be related to the azimuth angle. For example, the second screen 202 may include the visual object 210 representing the reference position. For example, the second screen 202 may include the visual object 215 extending from the reference position and representing the designated range including the first range 217. For example, the visual object 215 of the second screen 202 may be displayed brighter than the visual object 215 of the first screen 201. The visual object 215 representing the designated range may be displayed in a fixed state on the second screen 202. For example, even if the electronic device 101 moves in the direction indicated through the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the second screen 202, the visual object 220 representing the relative position of the satellite may move according to the movement of the electronic device 101. The designated range may represent an area wider than the first range 217. In other words, the first range 217 may represent a virtual area included in the designated range and not displayed on the second screen 202. However, the embodiment of the present disclosure is not limited thereto. For example, the visual object 215 may further include another visual object representing the first range 217. For example, the second screen 202 may include the visual object 220 representing the relative position of the satellite with respect to the electronic device 101. In the second screen 202, the relative position of the satellite may be located within the first range 217 of the visual object 215 representing the designated range. For example, the second screen 202 may include the visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202, the visual object 240 may further include another text representing a transmission/reception state, together with the text for guiding to hold the orientation. For example, in the example of the second screen 202, the visual object 240 may further include the other text (e.g., sending messages) representing that it is in the transmission state.

Although not illustrated in FIG. 2, according to an embodiment, the electronic device 101 may identify whether a connection for transmitting and receiving data with the satellite is established in a state in which the second screen 202 is displayed. For example, the electronic device 101 may identify whether the data is transmitted or received through the communication circuit within designated time in a state in which the second screen 202 is displayed. For example, the designated time may be identified based on at least one of performance of the communication circuit, a region (or a service region) in which the electronic device 101 is located, or time required to transmit and receive the data, such as a message. For example, as the performance of the communication circuit is better, the designated time may be shorter. Alternatively, as traffic for the satellite communication increases in the region, the designated time may be longer. Alternatively, as the time required to transmit and receive the data is longer, the designated time may be longer. However, the embodiment of the present disclosure is not limited thereto, and it may be set to a specified value by a service provider or a manufacturer of the electronic device 101 that provides an emergency rescue service through the satellite communication. For example, the data may include a message transmitted through the satellite communication, location information of the electronic device 101, or information for connection of a call. For example, in a case that the data is transmitted or received, the electronic device 101 may identify that the connection is established. Alternatively, in a case that the data is not transmitted or received, the electronic device 101 may identify that the connection is not established. According to an embodiment, the electronic device 101 may display a visual object representing the data based on identifying that the connection is established. Alternatively, the electronic device 101 may identify whether an elevation angle is within a second range based on identifying that the connection is not established.

In addition, although not illustrated in FIG. 2, the electronic device 101 may skip displaying the first screen 201 and display the second screen 202 based on identifying that the azimuth angle is within the first range. For example, the electronic device 101 may display the second screen 202 based on identifying that the azimuth angle is within the first range in a state in which the software application is executed.

Referring to FIG. 2, the electronic device 101 may display the third screen 203. For example, the electronic device 101 may display the third screen 203 through the display (e.g., the display module 160 of FIG. 1). The third screen 203 may represent a screen for adjusting the elevation angle of the electronic device 101 with respect to the satellite.

For example, the electronic device 101 may identify whether the elevation angle is within the second range based on identifying that the connection is not established within the designated time in a state in which the second screen 202 is displayed. In other words, the electronic device 101 may display the third screen 203 for adjusting the elevation angle based on identifying that the connection with the satellite is not established despite the azimuth angle within the first range. For example, the second range may represent a reference range for the elevation angle for the electronic device 101 to establish the connection (or communication) with the satellite. In other words, in a case that the elevation angle is located within the second range, the electronic device 101 may be relatively likely to establish the connection with the satellite.

For example, the second range may be identified based on information related to an antenna of the electronic device 101. The antenna may be connected to the communication circuit (e.g., the communication module 190 of FIG. 1) of the electronic device 101 and may include an antenna for communicating with the satellite. For example, the information may include at least one of the number of antennas, directivity of the antenna, a strength of a signal radiated through the antenna, or a frequency band of the signal. Hereinafter, in the present disclosure, for convenience of explanation, a case in which a length of the second range is 20° (e.g., -10° to 10°) is described as an example. For example, in a case that the second range is from -10° to 10°, a median value of 0° may represent a direction in which the satellite is actually located. However, the embodiment of the present disclosure is not limited thereto. In addition, in the present disclosure, a case in which the length of the second range is shorter than the length of the first range is described as an example, but the embodiment of the present disclosure is not limited thereto. For example, the length of the second range may be equal to or longer than the length of the first range. The length may be referred to as a size.

According to an embodiment, the electronic device 101 may display the third screen 203 based on identifying that the elevation angle is outside the second range. For example, the electronic device 101 may display the third screen 203 changed from the second screen 202. For example, the third screen 203 may represent a screen for adjusting the elevation angle outside the second range to be located within the second range. For example, the third screen 203 may include the visual object 210 representing the reference position. For example, the third screen 203 may include the visual object 215 extending from the reference position and representing the designated range including the first range 217. The visual object 215 representing the designated range may be displayed in a fixed state on the third screen 203. For example, even if the electronic device 101 moves in the direction indicated through the visual object 230 and the visual object 240, the visual object 215 may be displayed in a fixed state to face the specific portion (e.g., the upper portion) of the display of the electronic device 101. This is because the designated range and the first range 217 are areas identified based on the actual location of the satellite. In the third screen 203, the visual object 220 representing the relative position of the satellite may move according to movement of the electronic device 101. The designated range may represent an area wider than the first range 217. In other words, the first range 217 may represent a virtual area included in the designated range and not displayed on the third screen 203. However, the embodiment of the present disclosure is not limited thereto. For example, the visual object 215 may further include another visual object representing the first range 217. For example, the third screen 203 may include the visual object 220 representing the relative position of the satellite with respect to the electronic device 101. In the third screen 203, the relative position of the satellite may be located within the first range 217 of the visual object 215 representing the designated range. For example, the third screen 203 may include a visual object 255 for guiding a tilting direction for changing the elevation angle of the electronic device 101. For example, the visual object 255 may be displayed in the visual object 210 representing the reference position. For example, the visual object 255 may be displayed in a state of being at least partially superimposed on the visual object 210. However, the embodiment of the present disclosure is not limited thereto. For example, the third screen 203 may display the visual object 255 on at least a partial area of the third screen 203. In addition, for example, the third screen 203 may display the visual object 255 together, within an area in which the visual object 240 including text is displayed. For example, the visual object 255 for guiding the tilting direction may include an animation representing the tilting direction. For example, the tilting direction may include up-tilting for increasing the elevation angle or down-tilting for reducing the elevation angle. The third screen 203 may include the visual object 240 including text for guiding another movement of the electronic device in the tilting direction. For example, the other movement may include rotation in the tilting direction (e.g., front (or up-tilting) or backward (or down-tilting)). In the example of FIG. 2, referring to the third screen 203, the visual object 240 may include the text (e.g., To improve satellite signal, tilt your phone backward) for guiding the down-tilting for reducing the elevation angle.

In addition, although not illustrated in FIG. 2, the electronic device 101 may display the second screen 202 based on identifying that the elevation angle is within the second range. For example, the electronic device 101 may display the third screen 203 based on identifying that the elevation angle is outside the second range in a state in which the second screen 202 is displayed. Thereafter, the electronic device 101 may display the second screen 202 changed from the third screen 203 based on the elevation angle being changed within the second range according to the other movement, in a state in which the third screen 203 is displayed. Alternatively, the electronic device 101 may skip displaying the third screen 203 and maintain a state of displaying the second screen 202 based on identifying that the elevation angle is within the second range in a state in which the second screen 202 is displayed. According to an embodiment, the electronic device 101 may identify whether a connection for transmitting and receiving data with the satellite is established in a state in which the second screen 202 is displayed.

Referring to the above, an electronic device and a method according to an embodiment of the present disclosure may provide a screen for adjusting the identified azimuth angle to be located within the first range. In addition, the electronic device and the method according to an embodiment of the present disclosure may provide a screen for adjusting the elevation angle to be located within the second range in a case in which the connection with the satellite is not established through the azimuth angle within the first range. Accordingly, the electronic device and the method according to an embodiment of the present disclosure may improve directivity between the satellite and the electronic device by aligning the direction of the electronic device 101, in which the second direction of the antenna is considered with respect to the first direction identified through the sensor, with the position of the satellite. In addition, the electronic device and the method according to an embodiment of the present disclosure may secure stability of the connection between the satellite and the electronic device. In the electronic device and the method according to an embodiment of the present disclosure, a user of the electronic device 101 may more intuitively obtain the directivity and the stability by displaying the screen for adjusting the azimuth angle to be located within the first range and the screen for adjusting the elevation angle to be located within the second range.

FIG. 3 illustrates an exemplary block diagram of an electronic device. An electronic device 101 of FIG. 3 may include the electronic device 101 of FIG. 1. A satellite 370 of FIG. 3 may include the satellite, which is a target for the electronic device 101 to perform the satellite communication.

The electronic device 101 according to an embodiment may include at least one of a processor 120, memory 130, a display 320, a sensor 310, and a communication circuit 330. The processor 120, the memory 130, the display 320, the sensor 310, and the communication circuit 330 may be electronically and/or operably coupled with each other by an electronical component such as a communication bus. In the following, hardware being electronically and/or operably coupled with each other may mean that a direct or an indirect connection between the hardware is established by wire or wirelessly so that second hardware among the hardware is controlled by first hardware. Although illustrated based on different blocks, an embodiment is not limited thereto, and some (e.g., the processor 120, the memory 130, and the communication circuit 330) of the hardware of FIG. 3 may be included in a single integrated circuit such as a system on a chip (SoC). A type and/or the number of the hardware included in the electronic device 101 is not limited as illustrated in FIG. 3. For example, the electronic device 101 may include only some of the hardware components illustrated in FIG. 3.

The processor 120 of the electronic device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 120 may have a structure of a single-core processor, or may have a structure of a multi-core processor such as a dual core, a quad core, or a hexa core.

For example, the processor 120 may include various processing circuits and/or a plurality of processors. For example, a term "processor" used in the present document, including the scope of claims, may include various processing circuits including at least one processor, and one or more of the at least one processor may be configured to perform various functions described below individually and/or collectively in a distributed manner. As used below, in case that "processor", "at least one processor", and "one or more processors" are described as configured to perform various functions, these terms are not limited to, but encompass, for example, situations in which one processor performs some of the cited functions, and another processor(s) performs other of the cited functions, and also situations in which one processor may perform all of the cited functions. Additionally, the at least one processor may include a combination of processors that perform various enumerated/disclosed functions, for example, in a distributed manner. The at least one processor may execute program instructions to achieve or perform various functions.

The memory 130 of the electronic device 101 according to an embodiment may include a hardware component for storing data and/or instructions inputted to and/or outputted from the processor 120 of the electronic device 101. The memory 130 may include, for example, volatile memory such as random-access memory (RAM) and/or non-volatile memory such as read-only memory (ROM). The volatile memory may include, for example, at least one of dynamic RAM (DRAM), static RAM (SRAM), cache RAM, and pseudo SRAM (PSRAM). The non-volatile memory may include, for example, at least one of programmable ROM (PROM), erasable PROM (EPROM), electrically erasable PROM (EEPROM), flash memory, a hard disk, a compact disk, a solid state drive (SSD), and an embedded multi-media card (eMMC).

In an embodiment, the display 320 of the electronic device 101 may output visualized information (e.g., screens 201, 202 and 203 of FIG. 2) to a user. For example, the display 320 may output the visualized information to the user by being controlled by the processor 120 including a circuit such as a graphic processing unit (GPU). The display 320 may include a flat panel display (FPD) and/or electronic paper. The FPD may include a liquid crystal display (LCD), a plasma display panel (PDP), and/or one or more light emitting diodes (LEDs). The LED may include an organic LED (OLED). For

EP 4 707 867 A1

example, the display 320 may include at least a portion of the display module 160 of FIG. 1.

The sensor 310 of the electronic device 101 according to an embodiment may generate electric information that may be processed by the processor 120 and/or the memory 130 of the electronic device 101 from non-electronic information related to the electronic device 101. The information may be referred to as sensor data. The sensor 310 may include a global positioning system (GPS) sensor for detecting a geographic location of the electronic device 101, an image sensor, an illumination sensor and/or a time-of-flight (ToF) sensor, and an inertial measurement unit (IMU) for detecting physical motion of the electronic device 101. For example, the electronic device 101 may identify a direction of the electronic device 101 by using the sensor 310 including the IMU. For example, the sensor 310 may include at least a portion of the sensor module 176 of FIG. 1.

The IMU may include an acceleration sensor, a gyro sensor, a geomagnetic sensor, or a combination thereof. The acceleration sensor may output data representing a direction and/or magnitude of acceleration of gravity applied to the acceleration sensor along a plurality of axes (e.g., x-axis, y-axis, and z-axis) perpendicular to each other. The gyro sensor may output data representing rotation of each of the plurality of axes. The geomagnetic sensor may output data representing a direction (e.g., a direction of the N pole or the S pole) of a magnetic field in which the geomagnetic sensor is included. The IMU in the sensor 310 may be referred to as a motion sensor in terms of detecting motion of the electronic device 101. For example, the electronic device 101 may identify a direction of the electronic device 101 by controlling the sensor 310. The electronic device 101 may display, in the display, a visual object (e.g., a visual object 220 of FIG. 2) representing a relative position of the satellite 370 with respect to the electronic device 101 based on identifying the direction.

In an embodiment, the communication circuit 330 of the electronic device 101 may include hardware components for supporting transmission and/or reception of electrical signals between the electronic device 101 and an external electronic device (e.g., the satellite 370). The communication circuit 330 may include, for example, at least one of MODEM, an antenna, and an optic/electronic (O/E) converter. The communication circuit 330 may support the transmission and/or the reception of the electrical signals based on various types of protocols such as Ethernet, a local area network (LAN), a wide area network (WAN), wireless fidelity (WiFi), Bluetooth, Bluetooth low energy (BLE), ZigBee, long term evolution (LTE), and 5G new radio (NR). For example, the communication circuit 330 may include at least a portion of the communication module 190 of FIG. 1.

For example, the electronic device 101 may establish a connection with the satellite 370 using the communication circuit 330. First transmission power obtained by the electronic device 101 based on the connection between the electronic device 101 and the satellite 370 may be included in a range higher than a range of second transmission power obtained based on a connection between the electronic device 101 and at least one base station. The electronic device 101 may transmit a message to the satellite 370 using the first transmission power. The electronic device 101 may transmit the message to the satellite 370 based on the first transmission power obtained using a communication circuit configured to operate based on a voltage from a power supply circuit.

In the memory 130 of the electronic device 101 according to an embodiment, one or more instructions (or commands) representing a calculation and/or an operation to be performed by the processor 120 of the electronic device 101 on data may be stored. A set of the one or more instructions may be referred to as a program, firmware, an operating system, a process, a routine, a sub-routine and/or an application. In the following, an application being installed in an electronic device (e.g., the electronic device 101), one or more instructions provided in a form of an application are stored in the memory 130, and that the one or more applications are stored in an executable format (e.g., a file with an extension designated by the operating system of the electronic device 101).

Referring to FIG. 3, programs installed in the electronic device 101 may be classified into any one of different layers, including an application layer 340, a framework layer 350, and/or a hardware abstraction layer (HAL) 360, based on a target. Programs (e.g., drivers) designed to target hardware (e.g., the display 320, the sensor 310, and/or the communication circuit 330) of the electronic device 101 may be classified in the hardware abstraction layer 360. For example, programs (e.g., an angle identification unit 351, a satellite position tracking unit 353, and/or a signal quality identification unit 355) designed to target at least one of the hardware abstraction layer 360 and/or the application layer 340 may be classified in the framework layer 350. Programs classified as the framework layers 350 may provide an application programming interface (API) that is executable based on another program.

For example, a program designed to target a user who controls the electronic device 101 may be classified in the application layer 340. As an example of the programs classified as the application layer 340, a pointing application 341 and/or an emergency call (e.g., SOS) application 342 are exemplified, but the embodiment is not limited thereto. For example, the pointing application 341 may represent an application for identifying the relative position of the satellite with respect to the electronic device 101. For example, the emergency call application 342 may represent an application that provides an emergency rescue service. The pointing application 341 or the emergency call application 342 may be included in the software application for connecting with the satellite of FIG. 2. The software application for connecting with the satellite may be referred to as a software application for satellite communication or a satellite communication application. For example, the programs classified as the application layer 340 (e.g., software applications) may cause

13

execution of functions supported by the programs classified as the framework layer 350 by calling the API.

For example, the electronic device 101 may identify an azimuth angle and an elevation angle of the electronic device 101 with respect to the satellite based on execution of the angle identification unit 351. For example, the electronic device 101 may identify a direction according to an orientation of the electronic device 101 or a direction (e.g., a first direction) in which a specific surface (e.g., a front surface on which the display 160 is located) of the electronic device 101 faces by using the sensor 310. For example, the electronic device 101 may identify a direction in which a signal radiated through an antenna connected to the communication circuit 330 propagates or a direction (e.g., a second direction) in which a main lobe of a beam radiated through the antenna faces. For example, the electronic device 101 may identify a direction of the electronic device 101 in which the first direction and the second direction are combined based on the angle identification unit 351. For example, the electronic device 101 may identify the azimuth angle and the elevation angle based on coordinate values indicating the direction of the electronic device 101. For example, the coordinate values may include a first coordinate, which is an x-axis coordinate for representing the first direction, a second coordinate, which is a y-axis coordinate for representing the first direction, and a third coordinate, which is a z-axis coordinate for representing the first direction. Specific content with respect to a method of identifying the azimuth angle and the elevation angle will be described in FIGS. 6A to 6C and 7A to 7D below.

For example, the electronic device 101 may identify an actual position of the satellite based on execution of the satellite position tracking unit 353. For example, the electronic device 101 may obtain information on the actual position of the satellite through API called based on execution of the software application, such as the pointing application 341 or the emergency call application 342. For example, the API may be included in SDK for supporting the satellite communication service. The electronic device 101 may identify the actual position of the satellite based on the information.

For example, the electronic device 101 may identify quality of a signal radiated from the electronic device 101 based on execution of the signal quality identification unit 355. For example, the electronic device 101 may display a screen (e.g., the second screen 202 of FIG. 2) for attempting to establish a connection with the satellite or a screen (e.g., the third screen 203 of FIG. 2) for adjusting the elevation angle, based on the quality of the signal. For example, the electronic device 101 may identify the quality of the signal using the API called based on the software application. For example, the quality of the signal may be distinguished by a designated number of levels. For example, the designated number of levels may include five levels. However, the embodiment of the present disclosure is not limited thereto.

Referring to FIG. 3, according to an embodiment, the electronic device 101 may communicate with the satellite 370 using the communication circuit 330. The satellite 370 may include at least one of a processor 380 and a communication circuit 390. In the satellite 370, the processor 380 and the communication circuit 390 may be electrically and/or operatively connected with each other by an electronic component such as a communication bus. Each of the processor 380 and the communication circuit 390 in the satellite 370 may correspond to each of the processor 120 and the communication circuit 330 in the electronic device 101. In order to reduce repetition of description, among a description of the processor 380 and the communication circuit 390, an overlapping description of the processor 120 and the communication circuit 330 in the electronic device 101 may be omitted.

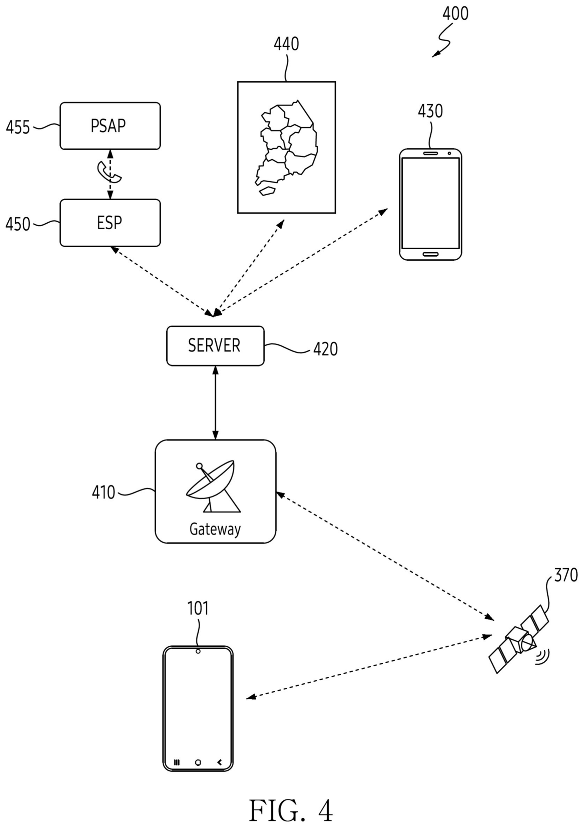

FIG. 4 illustrates an example of a network environment including an electronic device and a satellite. An electronic device 101 of FIG. 4 may include the electronic device 101 of FIGS. 1 to 3. A satellite 370 of FIG. 4 may include the satellite 370 of FIG. 3. FIG. 4 illustrates an example of a network environment 400 including the electronic device 101 and the satellite 370.

Referring to the network environment 400 of FIG. 4, the electronic device 101 may establish a connection with the satellite 370. For example, the connection between the electronic device 101 and the satellite 370 may be referred to as a service link. For example, the electronic device 101 may establish the connection with the satellite 370 through a communication circuit 330. In addition, referring to the network environment 400, a gateway 410 may establish a connection with the satellite 370. The connection between the gateway 410 and the satellite 370 may be referred to as a feeder link. For example, the feeder link may be established based on a relatively wider frequency range and/or a wider frequency band than the service link. For example, the gateway 410 may be referred to as a ground station.

For example, the gateway 410 may be connected to a server 420. For example, the gateway 410 may be connected to the server 420 based on a designated protocol. For example, the server 420 may be connected to an external electronic device 430, a map application 440, and an emergency service provider (ESP) 450. For example, the server 420 may provide a location sharing service or an ESP integration service (e.g., a satellite communication service) for emergency rescue using information obtained from the satellite 370 through the gateway 410. The satellite communication service is merely exemplary, and an embodiment of the present disclosure is not limited thereto. For example, the server 420 may provide a message, provided through the satellite 370 and is for notifying an emergency to the external electronic device 430. Alternatively, for example, the server 420 may provide location information (e.g., GPS) obtained from the satellite 370 to the map application 440. In other words, the server 420 may provide the location sharing service by providing the information obtained from the satellite 370 to the external electronic device 430 and the map application 440. Alternatively, for example, the server 420 may provide the ESP 450 with the information obtained from the satellite 370. Although FIG. 4 illustrates one ESP 450, the embodiment of the present disclosure is not limited thereto. For example, the server 420 may provide the information to a plurality of ESPs 450. The ESP 450 may provide the information obtained through the server 420 to public safety answering points (PSAPs) 455. The PSAP 455 may represent a node at which emergency/non-emergency calls are started.

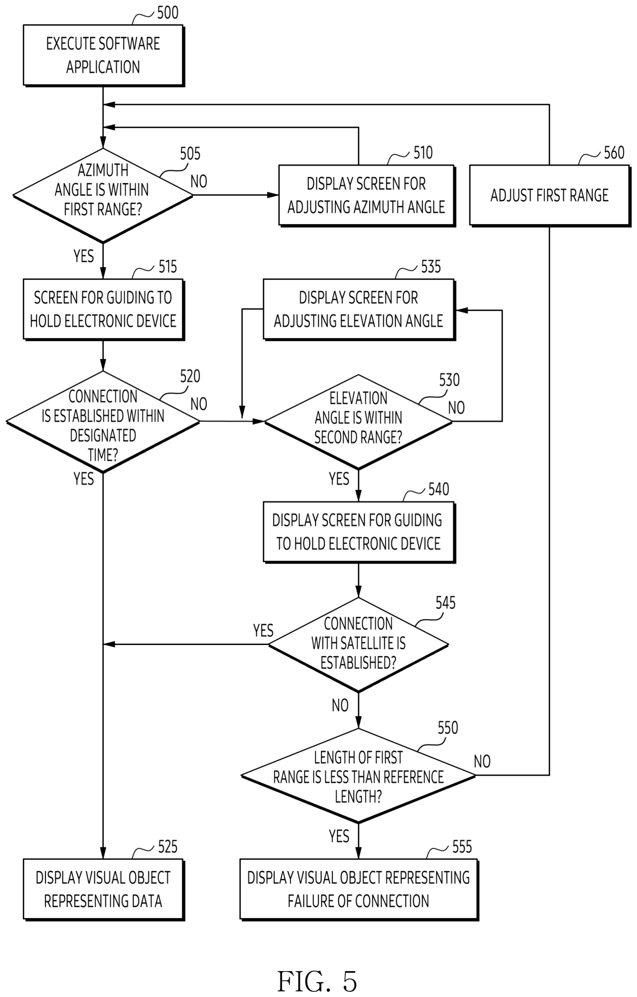

Referring to the above, the electronic device 101 may provide the satellite communication service including the emergency rescue service to a user by establishing the connection with the satellite 370. In this case, in order to smoothly provide the satellite communication service, a stable connection between the electronic device 101 and the satellite 370 may be required. For the stable connection, a direction of the electronic device 101 and a position of the satellite 370 need to be aligned (or matched). The electronic device 101 may perform more efficient and accurate alignment by providing screens including the screens 201, 202 and 203 of FIG. 2 through a software application. Specific content with respect to a method of performing the alignment as described above will be described through a method of FIG. 5.

FIG. 5 illustrates an example of an operation flow of a method for aligning a direction of an electronic device with a position of a satellite.

The satellite of FIG. 5 may include the satellite 370 of FIG. 3. The electronic device of FIG. 5 may include the electronic device 101 of FIGS. 1 to 4. The method of FIG. 5 may be performed by an electronic device 101. For example, at least one operation of the method may be controlled by a processor 120.

Referring to FIG. 5, in operation 500, the electronic device 101 may execute a software application. For example, the electronic device 101 may execute the software application based on at least a portion of an input of a user. For example, the software application may include a software application (e.g., the pointing application 341 or the emergency call application 342 of FIG. 3) for connecting with the satellite through a communication circuit 330. The software application for connecting with the satellite may be referred to as a software application for satellite communication or a satellite communication application.

According to an embodiment, the electronic device 101 may identify a position of the satellite in a state in which the software application is executed. The position of the satellite may represent an actual position of the satellite. For example, the electronic device 101 may identify the position of the satellite through a software development kit (SDK) for supporting a satellite communication service. The SDK is merely an example for convenience of explanation, and an embodiment of the present disclosure is not limited thereto. For example, the position of the satellite may be identified through an application programming interface (API) called by the software application. The API may be included in the SDK.

According to an embodiment, the electronic device 101 may identify the direction of the electronic device 101. For example, the electronic device 101 may identify the second direction, identified with respect to the first direction identified by a sensor in which the electronic device includes and indicated by an antenna of the electronic device 101. The direction of the electronic device 101 may be referred to as a direction in which the second direction is considered with respect to the first direction. The direction of the electronic device 101 may also be referred to as a direction in which the first direction and the second direction are combined. For example, the electronic device 101 may identify an azimuth angle and an elevation angle of the electronic device 101 with respect to the satellite based on the direction. Specific content related to this will be described in FIGS. 6A to 6C and 7A to 7D below.

In operation 505, the electronic device 101 may identify whether the azimuth angle is within a first range. For example, the electronic device 101 may identify whether the azimuth angle is within the first range (e.g., the first range 217 of FIG. 2) in a state in which the software application is executed. For example, the electronic device 101 may identify whether the azimuth angle is included in the first range. In a case that the azimuth angle is included in the first range, the electronic device 101 may identify that the azimuth angle is within the first range. Alternatively, in a case that the azimuth angle is different from values within the first range, the electronic device 101 may identify that the azimuth angle is outside the first range. For example, the first range may represent a reference range for the azimuth angle for the electronic device 101 to establish a connection (or communication) with the satellite. In other words, in a case that the azimuth angle is located within the first range, the electronic device 101 may be relatively likely to establish the connection with the satellite.

According to an embodiment, the first range may be identified based on information related to the antenna of the electronic device 101. The antenna may be connected to a communication circuit (e.g., the communication circuit 330 of FIG. 3) of the electronic device 101 and may include an antenna for communicating with the satellite. For example, the information may include at least one of the number of antennas, directivity of the antenna, a strength of a signal radiated through the antenna, or a frequency band of the signal. Hereinafter, in the present disclosure, for convenience of explanation, a case in which a length of the first range is 40° (e.g., -20° to 20°) is described as an example. For example, in a case that the first range 217 is from - 20° to 20°, a median value of 0° may represent a direction in which the satellite is actually located. However, the embodiment of the present disclosure is not limited thereto.

Although not illustrated in FIG. 5, in response to execution of the software application, the electronic device 101 may display an initial screen. For example, the electronic device 101 may identify a position of the satellite and identify whether the azimuth of the satellite of the electronic device 101 is within the first range, in a state in which the initial screen is displayed. For example, the initial screen may include a screen that performs setting for performing the connection with the satellite through the software application. Alternatively, referring to FIG. 2, the initial screen may include a screen including remaining visual objects other than a visual object 240 among visual objects included in the first screen. In this case, the initial screen may include another visual object including different text from the visual object 240.

In operation 505, based on identifying that the azimuth angle is within the first range, the electronic device 101 may perform operation 515. Alternatively, based on identifying that the azimuth angle is outside the first range, the electronic device 101 may perform operation 510.

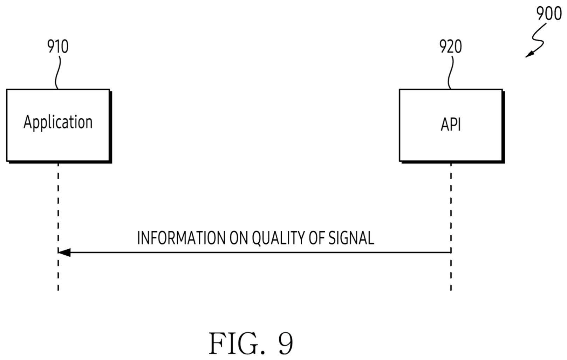

According to an embodiment, the electronic device 101 may display a screen based on quality of a signal before performing the operation 515 after performing the operation 505. For example, the electronic device 101 may skip display of a second screen (e.g., the second screen 202 of FIG. 2) and identify whether the elevation angle is within the second range, in a case that a level of the quality of the signal is less than a reference level. Accordingly, the electronic device 101 may display a third screen (e.g., the third screen 203 of FIG. 2) based on identifying that the elevation angle is outside the second range. In other words, in a case that the level is less than the reference level, the electronic device 101 may perform operation 530 by omitting the operation 515 and operation 520. Alternatively, in a case that the level is greater than or equal to the reference level, the electronic device 101 may display the second screen. In other words, in a case that the level is greater than or equal to the reference level, the electronic device 101 may perform the operation 515 (and the operation 520). Specific content related to this will be described in FIG. 9.

In the operation 510, the electronic device 101 may display a screen for adjusting the azimuth angle. Hereinafter, the screen for adjusting the azimuth angle may be referred to as the first screen (e.g., the first screen 201 of FIG. 2). For example, the electronic device 101 may display the first screen through a display (e.g., the display 320 of FIG. 3) based on identifying that the azimuth angle is outside the first range.

For convenience of explanation, the first screen may refer to the first screen 201 of FIG. 2. For example, the first screen 201 may represent a screen for adjusting the azimuth angle outside the first range 217 to be located within the first range 217. For example, the first screen 201 may include a visual object 210 representing a reference position. For example, the first screen 201 may include a visual object 215 extending from the reference position and representing a designated range including the first range 217. The visual object 215 representing the designated range may be displayed in a fixed state on the first screen 201. For example, even if the electronic device 101 moves in a direction indicated through a visual object 230 and a visual object 240, the visual object 215 may be displayed in a fixed state to face a specific portion (e.g., an upper portion) of the display of the electronic device 101. This is because the designated range and the first range 217 are areas identified based on the actual position of the satellite. In the first screen 201, a visual object 220 representing a relative position of the satellite may move according to the movement of the electronic device 101. The designated range may represent an area wider than the first range 217. In other words, the first range 217 may represent a virtual area included in the designated range and not displayed on the first screen 201. However, the embodiment of the present disclosure is not limited thereto. For example, the visual object 215 may further include another visual object representing the first range 217. For example, the first screen 201 may include the visual object 220 representing the relative position of the satellite with respect to the electronic device 101. In the first screen 201, the relative position of the satellite may be located outside an area of the visual object 215 representing the designated range. For example, the first screen 201 may include the visual object 230 including an area of the designated range and extending to the visual object 220 within a circle in which the visual object 220 moves. The visual object 230 may represent a direction for changing the position of the satellite to within the designated range (or the first range 217). For example, referring to the first screen 201, in a case that the visual object 220 representing the position of the satellite is displayed in a right part outside the designated range, the visual object 230 may include an indicator pointing to the right (or clockwise). In other words, the visual object 230 may represent a visual object for intuitively displaying a distance between the visual object 215 representing the designated range and the visual object 220 representing the position of the satellite. For example, the first screen 201 may include the visual object 240 including text for guiding movement in the direction. In an example of FIG. 2, the visual object 240 of the first screen 201 may include text (e.g., Turn right to face the satellite) indicating to rotate to the right (or clockwise).

Referring back to FIG. 5, according to an embodiment, after performing the operation 510, the electronic device 101 may perform the operation 505 again. However, the embodiment of the present disclosure is not limited thereto. For example, the electronic device 101 may perform the operation 505 while performing the operation 510. In other words, the electronic device 101 may identify whether the azimuth angle is within the first range according to the movement of the electronic device 101 by the user.

In the operation 515, the electronic device 101 may display a screen for guiding to hold the electronic device 101. For convenience of explanation, hereinafter, a screen for guiding to hold an orientation of the electronic device 101 may be referred to as the second screen. For example, the electronic device 101 may display the second screen through the display (e.g., the display 320).

For example, the electronic device 101 may display the second screen changed from the first screen based on the azimuth angle outside the first range being changed to within the first range according to the movement of the electronic device 101, in a state in which the first screen is displayed. For example, the movement may include rotation for changing the azimuth angle. In a case that the azimuth angle is located within the designated range according to the movement of the electronic device 101, the electronic device 101 may display the first screen including a visual object (e.g., a visual object 250 of FIG. 8B) representing that the azimuth angle is located within the designated range. In other words, in a case that the azimuth angle is located within the designated range according to the movement of the electronic device 101, the electronic device 101 may display the first screen further including the visual object 250 of FIG. 8B, in a state of displaying the first screen (e.g., the first screen 201 of FIG. 2). According to an embodiment, a brightness of a visual object (e.g., the visual object 215 of FIG. 2) representing the designated range may be identified based on a visual object (e.g., the visual object 220 of FIG. 2) representing the relative position of the satellite with respect to the electronic device 101. Specific content related to this will be described in FIG. 8B below. In the above-described example, an example of changing the brightness of the visual object 215 is described, but the embodiment of the present disclosure is not limited thereto. According to an embodiment, the electronic device 101 may change the number of pixels of the display used to display the visual object 215 based on the visual object 220 representing the relative position of the satellite. For example, the number of pixels used to display the visual object 215 may increase as the visual object 220 approaches within the first range 217. The increase in the number may represent that the visual object 215 is displayed thickly.

Alternatively, for example, in the operation 505 performed before performing the operation 510, the electronic device 101 may skip display of the first screen and display the second screen, based on identifying that the azimuth angle is within the first range. For example, the electronic device 101 may display the second screen based on identifying that the azimuth angle is within the first range in a state in which the software application is executed.

For convenience of explanation, the second screen may refer to the second screen 202 of FIG. 2. For example, the second screen 202 may include the visual object 210 representing the reference position. For example, the second screen 202 may include the visual object 215 extending from the reference position and representing the designated range including the first range 217. For example, the visual object 215 of the second screen 202 may be displayed brighter than the visual object 215 of the first screen 201. The visual object 215 representing the designated range may be displayed in a fixed state on the second screen 202. For example, even if the electronic device 101 moves in the direction indicated through the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the first screen 201, the visual object 220 representing the relative position of the satellite may move according to the movement of the electronic device 101. The designated range may represent an area wider than the first range 217. In other words, the first range 217 may represent a virtual area included in the designated range and not displayed on the second screen 202. However, the embodiment of the present disclosure is not limited thereto. For example, the visual object 215 may further include another visual object representing the first range 217. For example, the second screen 202 may include the visual object 220 representing the relative position of the satellite with respect to the electronic device 101. In the second screen 202, the relative position of the satellite may be located within the first range 217 of the visual object 215 representing the designated range. For example, the second screen 202 may include the visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202, the visual object 240 may further include another text representing a transmission/reception state, together with the text for guiding to hold the orientation. For example, in the example of the second screen 202, the visual object 240 may further include the other text (e.g., sending messages) representing that it is in the transmission state.

Referring back to FIG. 5, in the operation 520, the electronic device 101 may identify whether a connection is established within designated time. For example, the electronic device 101 may identify whether a connection for transmitting and receiving data with the satellite has been established within a state in which the second screen is displayed. For example, the electronic device 101 may identify whether the data has been transmitted or received through the communication circuit within the designated time in a state of displaying the second screen. For example, the designated time may be identified based on at least one of performance of the communication circuit, a region (or a service region) in which the electronic device 101 is located, or time required to transmit and receive the data, such as a message. For example, as the performance of the communication circuit is better, the designated time may be shorter. Alternatively, as traffic for the satellite communication increases in the region, the designated time may be longer. Alternatively, as the time required to transmit and receive the data is longer, the designated time may be longer. However, the embodiment of the present disclosure is not limited thereto, and it may be set to a specific value by a service provider or a manufacturer of the electronic device 101 that provides an emergency rescue service through the satellite communication. For example, the data may include a message transmitted through the satellite communication, location information of the electronic device 101, or information for connection of a call. For example, in a case that the data is transmitted or received, the electronic device 101 may identify that the connection is established. Alternatively, in a case that the data is not transmitted or received, the electronic device 101 may identify that the connection is not established.

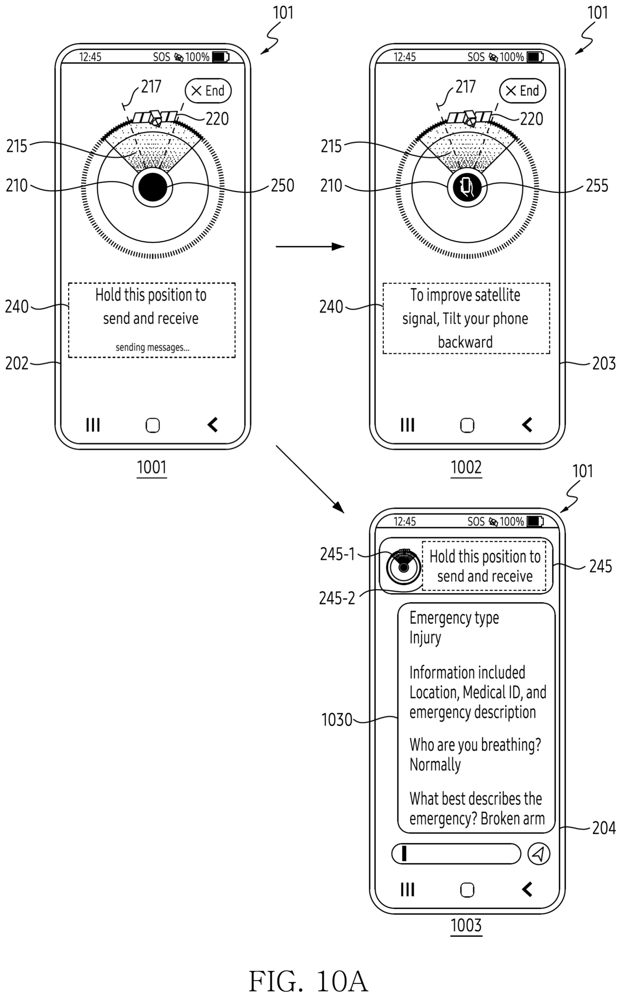

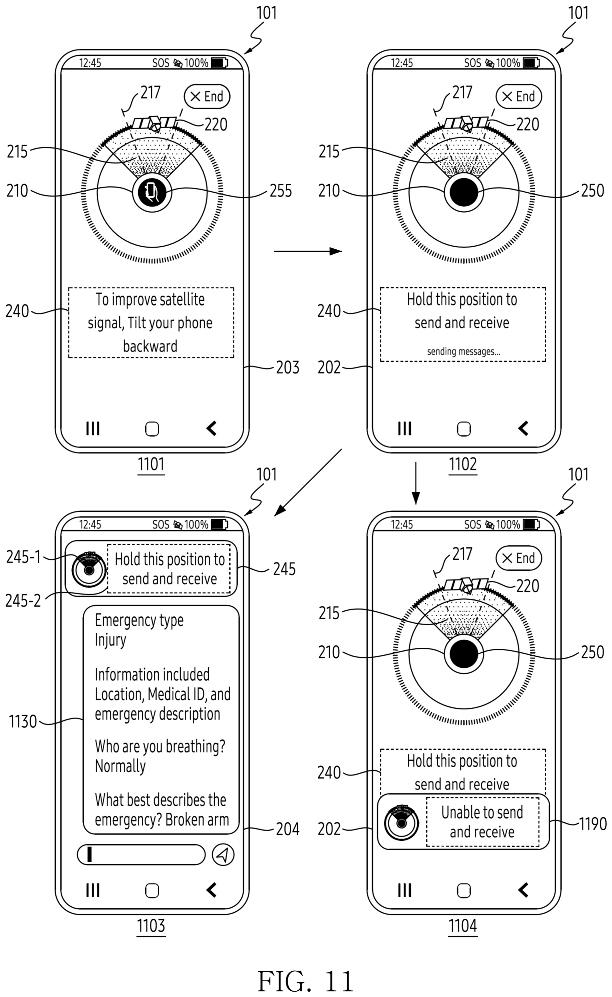

In operation 525, the electronic device 101 may display a visual object representing data. For example, the electronic device 101 may display a fourth screen including the visual object representing the transmitted and received data and changed from the second screen. For example, in a case that the data is a message for an emergency call, the visual object may include a visual object representing contents of the message. For specific content related to the fourth screen, a visual object 1030 of FIG. 10A or a visual object 1130 of FIG. 11 may be referred to below.

In operation 530, the electronic device 101 may identify whether the elevation angle is within the second range. For example, the electronic device 101 may identify whether the elevation angle is within the second range based on identifying that the connection is not established within the designated time in a state in which the second screen is displayed.

For example, the second range may represent a reference range for the elevation angle for the electronic device 101 to establish a connection (or communication) with the satellite. In other words, in a case that the elevation angle is located within the second range, the electronic device 101 may be relatively likely to establish the connection with the satellite.

For example, the second range may be identified based on information related to an antenna of the electronic device 101. The antenna may be connected to a communication circuit (e.g., the communication module 190 of FIG. 1) of the electronic device 101 and may include an antenna for communicating with the satellite. For example, the information may include at least one of the number of antennas, directivity of the antenna, a strength of a signal radiated through the antenna, or a frequency band of the signal. Hereinafter, in the present disclosure, for convenience of explanation, a case in which a length of the second range is 20° (e.g., -10° to 10°) is described as an example. For example, in a case that the second range is in the range of -10° to 10°, a median value of 0° may represent a direction in which the satellite is actually located. However, the embodiment of the present disclosure is not limited thereto. In addition, the present disclosure describes a case in which the length of the second range is shorter than the length of the first range as an example, but the embodiment of the present disclosure is not limited thereto. For example, the length of the second range may be equal to or longer than the length of the first range.

In the operation 530, based on identifying that the elevation angle is outside the second range, the electronic device 101 may perform operation 535. Alternatively, in the operation 530, based on identifying that the elevation angle is within the second range, the electronic device 101 may perform operation 540.

In the operation 535, the electronic device 101 may display a screen for adjusting the elevation angle. For convenience of explanation, hereinafter, the screen for adjusting the elevation angle may be referred to as a third screen. For example, the electronic device 101 may display the third screen changed from the second screen through the display (e.g., the display 320 of FIG. 3).

For convenience of explanation, the third screen may refer to the third screen 203 of FIG. 2.

For example, the third screen 203 may include the visual object 210 representing the reference position. For example, the third screen 203 may include the visual object 215 extending from the reference position and representing the designated range including the first range 217. The visual object 215 representing the designated range may be displayed in a fixed state on the third screen 203. For example, even if the electronic device 101 moves in the direction indicated by the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the third screen 203, the visual object 220 representing the relative position of the satellite may move according to the movement of the electronic device 101. The designated range may represent an area wider than the first range 217. In other words, the first range 217 may represent a virtual area included in the designated range and not displayed on the third screen 203. However, the embodiment of the present disclosure is not limited thereto. For example, the visual object 215 may further include another visual object representing the first range 217. For example, the third screen 203 may include the visual object 220 representing the relative position of the satellite with respect to the electronic device 101. In the third screen 203, the relative position of the satellite may be located within the first range 217 of the visual object 215 representing the designated range. For example, the third screen 203 may include a visual object 255 for guiding a tilting direction for changing the elevation angle of the electronic device 101. For example, the visual object 255 may be displayed in the visual object 210 representing the reference position. For example, the visual object 255 may be displayed in a state of being at least partially superimposed on the visual object 210. However, the embodiment of the present disclosure is not limited thereto. For example, the third screen 203 may display the visual object 255 on at least a partial area of the third screen 203. In addition, for example, the third screen 203 may display the visual object 255 together, within an area in which the visual object 240 including text is displayed. For example, the visual object 255 for guiding the tilting direction may include an animation representing the tilting direction. For example, the tilting direction may include up-tilting for increasing the elevation angle or down-tilting for reducing the elevation angle. The third screen 203 may include the visual object 240 including text for guiding another movement of the electronic device in the tilting direction. For example, the other movement may include rotation in the tilting direction (e.g., front (or up-tilting) or backward (or down-tilting)). In the example of FIG. 2, referring to the third screen 203, the visual object 240 may include the text (e.g., To improve satellite signal, tilt your phone backward) for guiding the down-tilting for reducing the elevation angle.

In the operation 540, the electronic device 101 may display a screen for guiding to hold the electronic device 101. The hold may represent a hold with respect to an orientation of the electronic device 101. The screen for guiding to hold the electronic device 101 may be referred to as the second screen. For example, the electronic device 101 may display the third screen based on the elevation angle outside the second range, and then display the second screen changed from the third screen based on the elevation angle outside the second range being changed to within the second range. Alternatively, the electronic device 101 may maintain displaying the second screen based on the elevation angle within the second range. In other words, the electronic device 101 may skip displaying the third screen and maintain a state of displaying the second screen based on identifying that the elevation angle is within the second range in a state in which the second screen is displayed.

In operation 545, the electronic device 101 may perform whether a connection with the satellite is established. For example, the electronic device 101 may identify whether a connection for transmitting and receiving data with the satellite has been established in a state in which the second screen is displayed. In other words, the electronic device 101 may identify whether the connection with the satellite is established based on the azimuth angle within the first range and the elevation angle within the second range.

For example, the electronic device 101 may identify whether the data has been transmitted or received through the communication circuit in a state in which the second screen is displayed. Unlike the operation 520, in the operation 545, the electronic device 101 may identify whether the data is transmitted or received for another designated time different from the designated time. For example, the other designated time may represent time longer than the designated time. However, the embodiment of the present disclosure is not limited thereto. For example, it may be set to a specified value by a service provider or a manufacturer of the electronic device 101 that provides an emergency rescue service through the satellite communication, or the other designated time may not be set. For example, the data may include a message transmitted through the satellite communication, location information of the electronic device 101, or information for connection of a call. For example, in a case that the data is transmitted or received, the electronic device 101 may identify that the connection is established. Alternatively, in a case that the data is not transmitted or received, the electronic device 101 may identify that the connection is not established.

In the operation 545, in a case that the connection with the satellite is established, the electronic device 101 may perform the operation 525. Alternatively, in the operation 545, in a case that the connection with the satellite is not established, the electronic device 101 may perform operation 550.

In the operation 550, the electronic device 101 may identify whether the length of the first range is less than a reference length. For example, the electronic device 101 may identify whether the length of the first range, which is the reference range for the azimuth angle, is less than the reference length. For example, the length of the first range may represent an absolute value for a difference between a first value and a second value within the first range. The length may be referred to as a size. The first value may represent a minimum value of the first range, and the second value may represent a maximum value of the first range. For example, the reference length may represent a minimum range for aligning the direction of the electronic device 101 with the position of the satellite. In a case that the reference length has an excessively small length, it may be difficult to align the direction of the electronic device 101 with the position of the satellite. For example, the reference length may be set by the service provider or the manufacturer of the electronic device 101 that provides the emergency rescue service through the satellite communication.

In the operation 550, in a case that the length of the first range is less than the reference length, the electronic device 101 may perform operation 555. Alternatively, in the operation 550, in a case that the length of the first range is greater than or equal to the reference length, the electronic device 101 may perform operation 560.

In the operation 550, the first range for the azimuth angle is described as an example, but the embodiment of the present disclosure is not limited thereto. For example, the electronic device 101 may identify whether the second range for the elevation angle is less than another reference length. Alternatively, for example, the electronic device 101 may identify whether the first range for the azimuth is less than the reference length (e.g., the first reference length) and whether the second range for the elevation angle is less than the other reference length (e.g., the second reference length). In this case, based on identifying that the first range is less than the reference length and the second range is less than the other reference length, the electronic device 101 may perform the operation 555.

In the operation 555, the electronic device 101 may display a visual object representing a failure of the connection. For example, the electronic device 101 may display the visual object representing the failure of the connection based on identifying that the length of the first range is less than the reference length. For example, the visual object representing the failure of the connection may be displayed in a state of being at least partially superimposed on the second screen. For example, being displayed in a state of being at least partially superimposed may include being displayed in a floated (or pop-up) state with respect to the second screen. For example, the visual object representing the failure of the connection may include text that transmission or reception of the data is impossible. In addition, for example, the visual object representing the failure of the connection may further include text for notifying that a signal radiated by the electronic device 101 is blocked. In addition, for example, the visual object representing the failure of the connection may further include text requesting a clear view of the sky where the satellite is located. In the above-described example, an example of various texts included in the visual object representing the failure of the connection are described, but the embodiment of the present disclosure is not limited thereto. For example, the visual object representing the failure of the connection may include other information (e.g., an image) representing substantially the same meaning. For specific content with respect to the visual object representing the failure of the connection, a visual object 1190 of FIG. 11 may be referred to below.

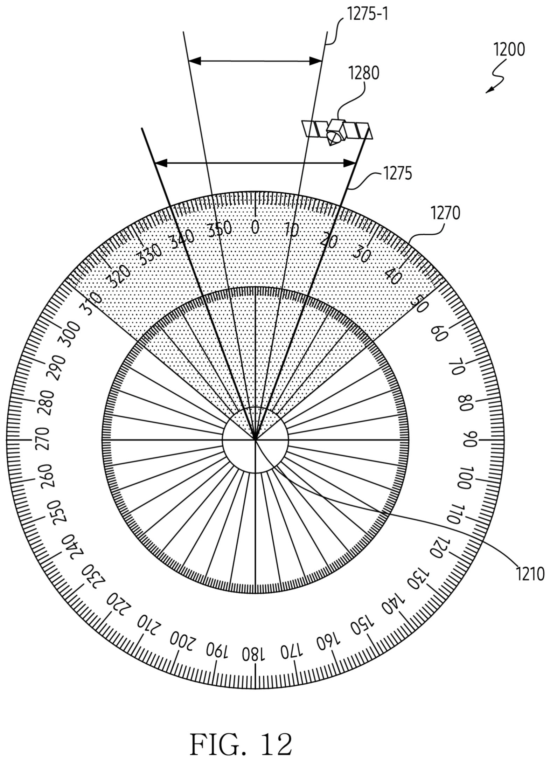

In the operation 560, the electronic device 101 may adjust the first range. For example, the electronic device 101 may change the first range to a third range having a length smaller than the length of the first range based on identifying that the first range is greater than or equal to the reference length. For example, the third range may be included in the reference range for the azimuth angle. As described above, in FIG. 5, for convenience of explanation, an example in which the first range is adjusted is described, but the embodiment of the present disclosure is not limited thereto. For example, the second range for the elevation angle may be changed to a fourth range having a length smaller than the length of the second range. The fourth range may be included in the reference range for the elevation angle. In addition, for example, in a case that the operation 550 identifies with respect to each of the first range and the second range, the electronic device 101 may adjust the first range to the third range and the second range to the fourth range. Specific content related to this will be described in FIG. 12.

According to an embodiment, after the operation 560, the electronic device 101 may perform the operation 505 again based on the adjusted range. For example, in the operation 505, the electronic device 101 may identify whether the azimuth angle is within the third range. The subsequent operation may be substantially applied in the same manner as described in FIG. 5.

Referring to the above, the electronic device 101 is illustrated to perform an operation of identifying whether the connection with the satellite has been established in a state in which the second screen is displayed, but the embodiment of the present disclosure is not limited thereto. According to an embodiment, the electronic device 101 may identify whether the connection has been established even in a state in which the first screen or the third screen is displayed. For example, the electronic device 101 may identify whether the connection has been established even if the azimuth angle is outside the first range or the elevation angle is outside the second range.

In addition, according to an embodiment, the electronic device 101 may skip displaying the second screen and identify whether the elevation angle is directly within the second range, based on identifying that the azimuth angle is within the first range. For example, the electronic device 101 may identify whether the elevation angle is within the second range as the azimuth angle outside the first range is changed to within the first range in a state in which the first screen is displayed. Thereafter, the electronic device 101 may display the third screen based on identifying that the elevation angle is outside the second range. In other words, the electronic device 101 may display the third screen changed from the first screen after displaying the first screen. Accordingly, the electronic device 101 may first align with the satellite and then attempt to connect with the satellite.

FIGS. 6A to 6C illustrate an example of a relationship between a direction of a sensor and a direction of an antenna.

The sensor may include the sensor 310 of FIG. 3. The direction of the sensor may indicate a direction according to an orientation of an electronic device 101 identified through the sensor 310 or a direction in which a specific surface (e.g., a front surface on which a display 160 is located) of the electronic device 101 faces. For example, the direction of the sensor may be referred to as a first direction. The antenna may be an antenna connected to the communication circuit 330 of FIG. 3 included in the electronic device 101. For example, the antenna may represent an antenna for communicating with the satellite. The direction of the antenna may represent a direction in which a signal radiated through the antenna propagates or a direction in which a main lobe of a beam radiated through the antenna faces. For example, the direction of the antenna may be referred to as a second direction.

Referring to FIG. 6A, an example 600 of coordinate systems for representing the second direction applied with respect to the first direction is illustrated. Referring to the example 600, a first vector 620 in a first coordinate system for representing the first direction and a second vector 640 in a second coordinate system extending with respect to the first vector 620 are illustrated. For example, the first coordinate system may have a position 610 of the electronic device 101 as an origin, and may include an x-axis 612, a y-axis 614, and a z-axis 616. For example, the second coordinate system may have a position 630 of another end different from the position 610 of the first vector 620 representing the first direction, as an origin, and may include an x-axis 632, a y-axis 634, and a z-axis 636.

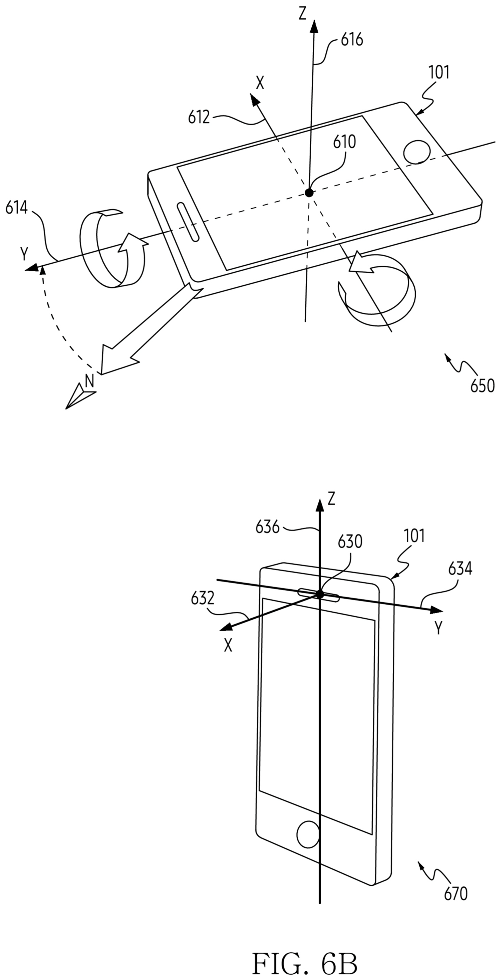

Referring to FIG. 6A, the first coordinate system with respect to the first direction of the sensor may be different from the second coordinate system with respect to the second direction of the antenna. In this regard, FIG. 6B may be referred to. FIG. 6B illustrates an example 650 of the first coordinate system defined with respect to the electronic device 101 and an example 670 of the second coordinate system defined with respect to the electronic device 101. Referring to the example 650, the x-axis 612, the y-axis 614, and the z-axis 616 may be defined with respect to the position 610 of the electronic device 101. Referring to the example 670, the x-axis 632, the y-axis 634, and the z-axis 636 may be defined based on the position 630 of the antenna of the electronic device 101. For convenience of explanation, FIG. 6B illustrates the position 610 of the electronic device 101 and the position 630 of the antenna, which are a point of the front surface of the electronic device 101 on which the display of the electronic device 101 is located, as an example, but an embodiment of the present disclosure is not limited thereto. For example, the position 610 of the electronic device 101 or the position 630 of the antenna may represent another point of the electronic device 101.

Referring to FIG. 6B, a direction of each of the axes 612, 614, and 616 of the first coordinate system may not match a direction of each of the axes 632, 634, and 636 of the second coordinate system. For example, the x-axis 612 of the first coordinate system may be defined as a direction that passes through the position 610, which is the center of the electronic device 101, and faces a side surface of the electronic device 101. Alternatively, the x-axis 632 of the second coordinate system may be defined in a direction that passes through the position 630 of the antenna of the electronic device 101 and faces an upper end of the electronic device 101. When comparing the first coordinate system with the second coordinate system, the x-axis 612 of the first coordinate system may be parallel (or coincident) with the y-axis 634 of the second coordinate system. Also, the y-axis 614 of the first coordinate system may be parallel (or coincident) with the z-axis 636 of the second coordinate system. In addition, the z-axis 616 of the first coordinate system may be parallel (or coincident) with the x-axis 632 of the second coordinate system.

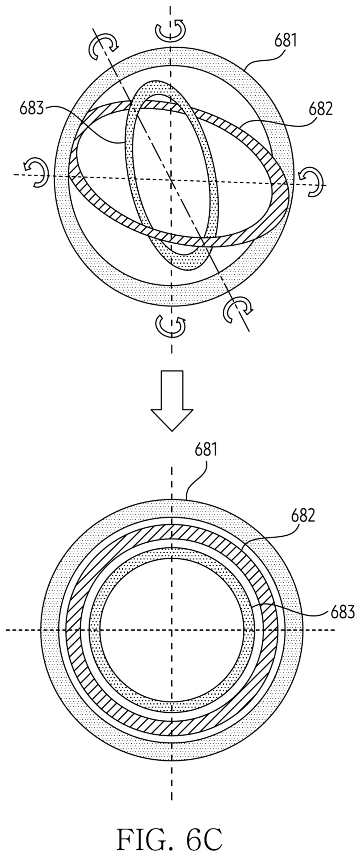

Referring to the above, the electronic device 101 needs to match the axes of the first coordinate system and the second coordinate system in order to calculate the second direction in which the first direction is considered. For example, the electronic device 101 may change a coordinate value with respect to an x-axis of the second vector 640 representing the second direction to a coordinate value with respect to an z-axis of the first vector 620 representing the first direction. For example, the electronic device 101 may change the coordinate value of the second vector 640 representing the second direction to the coordinate value of the x-axis of the first vector 620 representing the first direction. For example, the electronic device 101 may change a coordinate value with respect to a z-axis of the second vector 640 representing the second direction to a coordinate value with respect to a y-axis of the first vector 620 representing the first direction. However, as described above, in a case that each of the axes of the first coordinate system is sequentially changed to a corresponding axis among the axes of the second coordinate system (e.g., after changing the x-axis of the second coordinate system to the z-axis of the first coordinate system, the y-axis of the second coordinate system may be changed to the x-axis of the first coordinate system), a Gimbal lock phenomenon may occur. In order to describe the Gimbal lock in detail, FIG. 6C may be referred to.

FIG. 6C illustrates circles 681, 682, and 683 for representing a rotation transformation based on an axis in a coordinate system including three axes. The rotation transformation based on the axis may be understood to be substantially identical to a transformation of the axis of the first coordinate system of FIG. 6B into an axis corresponding to the second coordinate system. For example, in a case that the second circle 682 is rotated parallel to the first circle 681 in a state in which the first circle 681 is fixed, the Gimbal lock may occur. In a state in which the first circle 681 and the second circle 682 are parallel to each other, a transformation according to rotation of the third circle 683 may not be possible. In other words, as the circles 681, 682, and 683 for representing three dimensions sequentially perform the rotation transformation based on the axis, only two dimensions may be displayed.

Therefore, as described above, the electronic device 101 may use a quaternion rather than sequentially changing the axis (or the rotation transformation on the axis) to identify the second direction in which the first direction is considered. A method of identifying the second direction (or the direction of the electronic device 101) in which the first direction is considered based on the quaternion will be described in FIGS. 7A to 7D below.

FIGS. 7A to 7D illustrate examples of a method of identifying a direction of an electronic device. The direction of the electronic device may represent the second direction (or a direction in which the first direction and the second direction are combined) of the antenna in which the first direction of the sensor is considered.

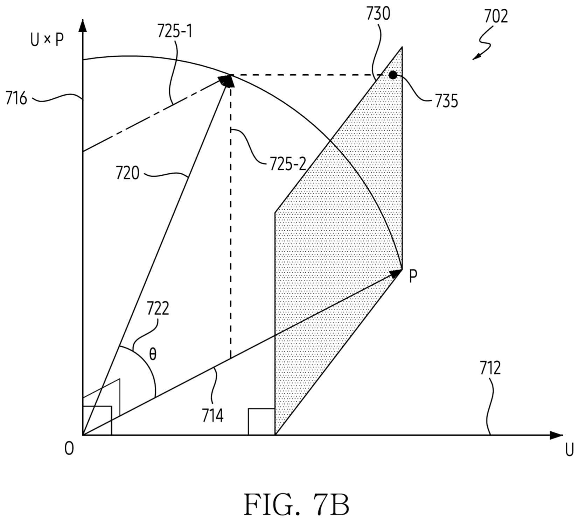

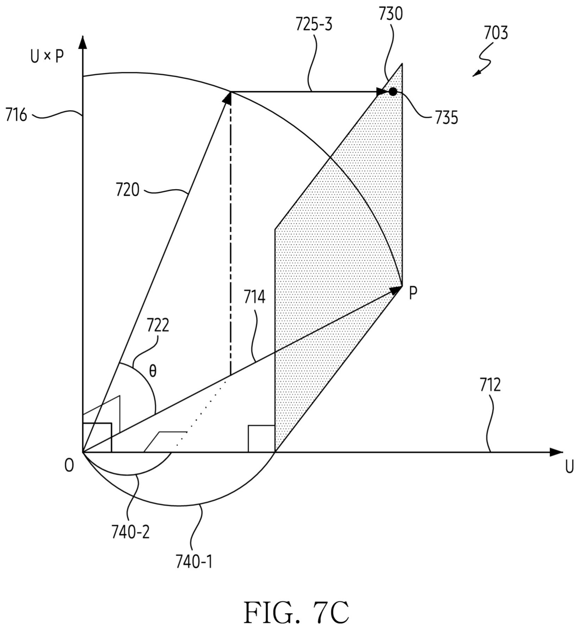

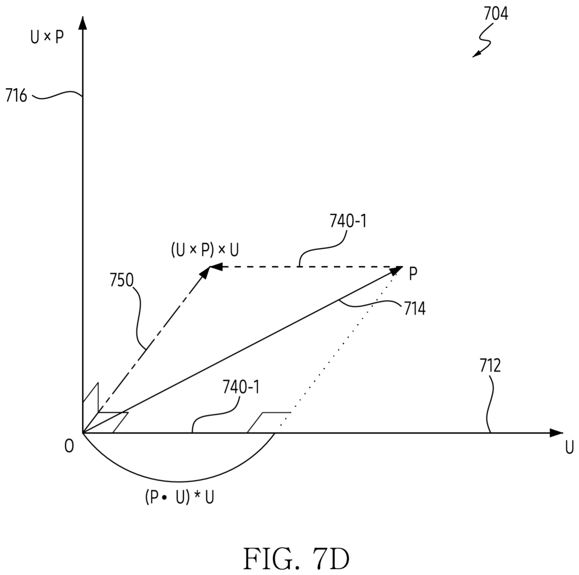

An example 701 of FIG. 7A, an example 702 of FIG. 7B, an example 703 of FIG. 7C, and an example 704 of FIG. 7D illustrate a vector U 712 representing the first direction, a vector P 714 representing the second direction, a vector U × P 716 representing a cross product of the vector U 712 and the vector P 714. The vector U 712 and the vector P 714 are assumed to be unit vectors having a size of 1 for convenience of description. The × may represent a cross product of vectors.

Referring to the example 701, an end among both ends of the vector P 714 representing the second direction, which is different from an origin O, may be understood as a coordinate representing a position of an antenna of an electronic device 101. In a case that the coordinate representing the position of the antenna is rotated by a specific angle $\Theta°$ 722 with respect to the vector U 712, the rotated coordinate 735 may be located in a plane 730. The plane 730 may be perpendicular with respect to the vector U 712. The vector facing the coordinate 735 rotated from the origin O may be defined based on a vector 720 in which the vector P 714 is rotated by the specific angle $\Theta°$ 722 in a plane defined by the vector P 714 and the vector U × P 716. The vector 720 may be defined by a sum of two vectors. For specific content related to this, FIG. 7B may be referred to.

Referring to the example 702, the vector 720 may be defined as a sum of a first partial vector 725-1 and a second partial vector 725-2. Since the vector P 714 is a unit vector, the first partial vector 725-1 may be defined as cos($\Theta$)*P, and the second partial vector 725-2 may be defined as sin($\Theta$)*(U × P). The * may represent a product operation. When referring to the first partial vector 725-1 and the second partial vector 725-2, the vector 720 may be defined as sin($\Theta$)*(U × P)+cos($\Theta$)*P. The + may represent a sum operation. A vector P' facing the coordinate 735 rotated from the origin O may be defined as a sum of the vector 720 and a vector facing the coordinate 735 from the end different from the origin of the vector 720. In order to describe the vector P' facing the coordinate 735 from the end different from the origin of the vector 720, FIG. 7C may be referred to.

Referring to the example 703, the vector P' facing the coordinate 735 from the end different from the origin of the vector 720 may be referred to as a third partial vector 725-3. The vector P' may be defined as a sum of the vector 720 and the third partial vector 725-3. The third partial vector 725-3 may be identified based on a difference between a fourth partial vector 740-1 and a fifth partial vector 740-2 facing a point on the vector U 712 from the origin O. For example, the fourth partial vector 740-1 and the fifth partial vector 740-2 may be defined based on a dot product ($\cdot$) of the vector U 712 and the vector P 714. For example, the fourth partial vector 740-1 may be defined as (P$\cdot$U)*U. The fifth partial vector 740-2 may be defined as {cos($\Theta$)*(P$\cdot$U)}*U. The third partial vector 725-3 identified based on a difference between the fourth partial vector 740-1 and the fifth partial vector 740-2 may be defined as {(1-cos($\Theta$))*(P$\cdot$U)}*U. Therefore, the vector P', which is the sum of the vector 720 and the third partial vector 725-3, may be defined as sin($\Theta$)*(U $\times$ P)+cos($\Theta$)*P+{(1-cos($\Theta$)*(P$\cdot$U)) *U}.

Referring to the above, the vector P' may be calculated based on an operation between the vector U 712 representing the first direction and the vector P 714 representing the second direction rotated by the specific angle $\Theta°$ with respect to the vector U 712. In addition, an operation representing the vector P' may be defined using an operation based on a quaternion. For example, the vector U 712 may be defined as a quaternion q, and the vector P 714 may be defined as a quaternion p. For example, the quaternion q may be defined as (cos($\Theta$/2), sin($\Theta$/2)*U). cos($\Theta$/2) of the quaternion q may be referred to as a scalar part, and sin($\Theta$/2)*U may be referred to as a vector part. In addition, for example, the quaternion p may be defined as (0, P). The 0 may be referred to as a scalar part, and the P may be referred to as a vector part. Rotation transformation using the quaternion q and the quaternion p may be defined as q*p*q$^{-1}$. In this case, q*p may be defined as in Equation 1 below.

$$q*p = (\cos(\Theta/2), \sin(\Theta/2)*U)*(0, P) = (-\sin(\Theta/2)*(U\cdot P), \cos(\Theta/2)*P + \sin(\Theta/2)*(U\times P)) \qquad \text{[Equation 1]}$$

The q*p may represent a product operation of the quaternion q and the quaternion p. In addition, q*p*q-1 for calculating the rotation transformation may be simplified as (a, A). The a may be referred to as a scalar part of a quaternion q*p*q-1, and the A may be referred to as a vector part of the quaternion q*p*q-1. Each of the a and the A may be defined as in the following equations.

$$a = -\sin(\Theta/2)*\cos\Theta/2)*(U\cdot P) + \sin(\Theta/2)*\cos(\Theta/2)*(U\cdot P) + \sin2(\Theta/2)*(UxP)\cdot U \qquad \text{[Equation 2]}$$

$$A = \cos2(\Theta/2)*P + \sin(\Theta/2)*\cos(\Theta/2)*(U \times P) + (\sin2(\Theta/2)*(U\cdot P))*U-\sin(\Theta/2)*\cos(\Theta/2)*(P\times U)-\sin2(\Theta/2)*(U\times P\times U) \qquad \text{[Equation 3]}$$

Referring to the above-described Equation, since the (UP)$\cdot$U part is 0 according to a characteristic of a cross product of a vector, the a may be 0. For explanation of an operation of the A, FIG. 7D may be referred to.

Referring to FIG. 7D, a vector U $\times$ P $\times$ U or (U $\times$ P) $\times$ U 750 in which the vector U $\times$ P 716 and the vector U 712 are cross multiplied may be defined based on a difference between the vector U 712 and the fourth partial vector 740-1. Referring to the above, since the fourth partial vector 740-1 is defined as (P$\cdot$U)*U, the vector (U$\times$P)$\times$U 750 may be equal to P-(P$\cdot$U)*U. When substituting the calculated equation ((U$\times$P)$\times$U)= P-(P$\cdot$U)*U) into Equation 3 representing the operation of the A, the quaternion q*p*q-1 may be calculated as (0, (cos$^2$($\Theta$/2) - sin$^2$($\theta$/2))*P + 2sin($\Theta$/2)cos($\Theta$/2)*(U$\times$P) + (2sin$^2$($\theta$/2) *(U$\cdot$P))*U). In addition, when substituting the theorem of trigonometric functions (e.g., sin($\theta$) = 2sin($\theta$/2)cos($\theta$/2), cos($\theta$) = cos$^2$($\theta$/2) - sin$^2$($\theta$/2)) with respect to the quaternion q*p*q-1, the quaternion q*p*q-1 may be simplified to (0, (cos($\theta$) *P+sin($\theta$)*(U$\times$P) +(2sin$^2$($\theta$/2)*(U$\cdot$P))*U). When substituting the trigonometric theorem (e.g., 2sin$^2$($\theta$/2) = 1 - cos($\theta$)) with respect to the simplified quaternion q*p*q-1, the quaternion q*p*q-1 may be simplified again to (0, (cos($\theta$)*P + sin($\theta$)*(U$\times$P) + ((1-cos($\theta$))*(U$\cdot$P))*U).

Referring to the above, the vector P' (e.g., sin($\theta$)*(U$\times$P)+cos($\theta$)*P+{(1-cos($\theta$)*(P$\cdot$U))*U}) calculated according to the operation of the vector U 712 and the vector 714 may be the same as a result (e.g., (0, (cos($\theta$)*P + sin($\theta$)*(U$\times$P) + ((1-cos($\theta$))*(U$\cdot$P))*U), the 0 represents a scalar part, and the (cos($\theta$)*P + sin($\theta$)*(U$\times$P) + ((1-cos($\Theta$))*(U$\cdot$P))*U)) represent a vector part. ) calculated using the quaternion q with respect to the vector 712 and the quaternion p with respect to the vector 714. Therefore, the electronic device 101 may identify the second direction (or the direction of the electronic device 101) in which the first direction is considered through a quaternion p' (=q*p*q-1) for a vector P'.

When a coordinate of the quaternion p' with respect to the vector part are (x, y, z), the azimuth angle of the electronic device 101 with respect to the satellite may be identified based on arctan(x,y)*(180/$\pi$). In addition, the elevation angle for the satellite of the electronic device 101 may be identified based on arcsin(z)*(180/$\pi$). The 180/$\pi$ may be about 57.2957795.

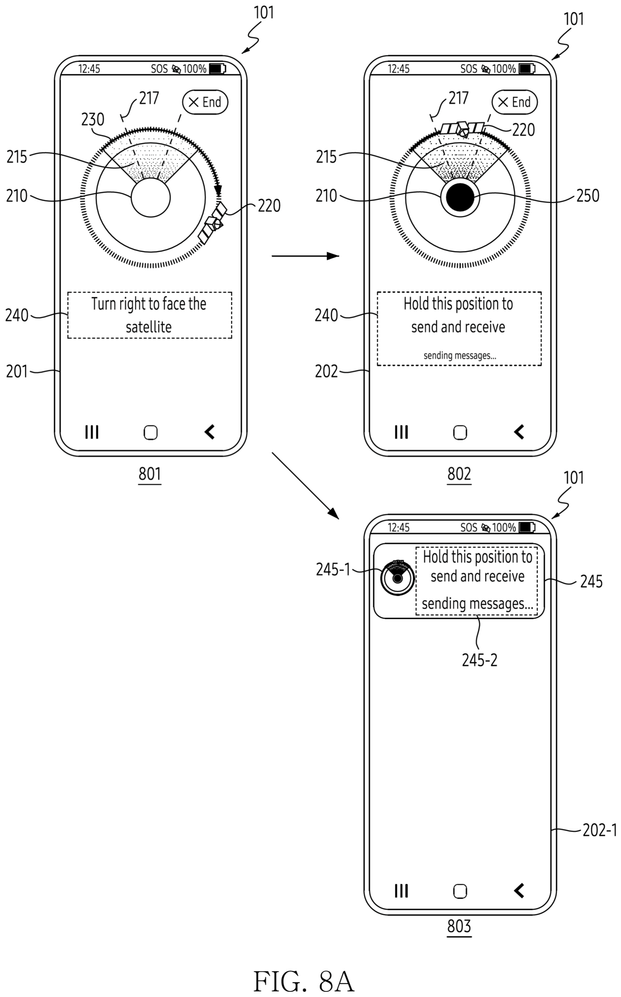

Referring to FIGS. 6A to 6C and 7A to 7D, the electronic device 101 may use a quaternion to calculate the first direction identified by the sensor and the second direction, which is the direction of the antenna, in the same coordinate system. The electronic device 101 may identify the azimuth angle and the elevation angle of the electronic device 101 with respect to the satellite based on the quaternion. The azimuth angle and the elevation angle may be used to align the direction of the electronic device 101 and a position of the satellite. In the alignment, a method of adjusting the azimuth angle to be located within a first range will be described in FIGS. 8A to 8D below.

FIGS. 8A to 8D illustrate examples of a method of adjusting an azimuth angle of an electronic device with respect to a satellite to be located within a first range.

FIG. 8A illustrates examples 801, 802, and 803 of a first screen 201 displayed in operation 510, a second screen 202 or a second screen 202-1, displayed in operation 515.

FIG. 8A illustrates an example of the first screen 201 displayed in the operation 510 and the second screens 202 and 202-1 displayed in the operation 515. Although not illustrated in FIG. 8A, according to an embodiment, an electronic device 101 may identify whether the azimuth angle is within the first range. For example, the electronic device 101 may identify whether the azimuth angle is within the first range 217 in a state in which the software application is executed.

Referring to the example 801, according to an embodiment, the electronic device 101 may display the first screen 201 based on identifying that the azimuth angle is outside the first range 217. For example, the electronic device 101 may display the first screen 201 through a display (e.g., the display 320 of FIG. 3) based on identifying that the azimuth is outside the first range 217.

For example, the first screen 201 may represent a screen for adjusting the azimuth angle outside the first range 217 to be located within the first range 217. For example, the first screen 201 may include a visual object 210 representing a reference position. For example, the first screen 201 may include a visual object 215 extending from the reference position and representing a designated range including the first range 217. The visual object 215 representing the designated range may be displayed in a fixed state on the first screen 201. For example, even if the electronic device 101 moves in a direction indicated by a visual object 230 and a visual object 240, the visual object 215 may be displayed in a fixed state to face a specific portion (e.g., an upper portion) of the display of the electronic device 101. This is because the designated range and the first range 217 are areas identified based on an actual position of the satellite. In the first screen 201, a visual object 220 representing a relative position of the satellite may move according to the movement of the electronic device 101. The designated range may represent an area wider than the first range 217. In other words, the first range 217 may represent a virtual area included in the designated range and not displayed on the first screen 201. However, an embodiment of the present disclosure is not limited thereto. For example, the visual object 215 may further include another visual object representing the first range 217. For example, the first screen 201 may include the visual object 220 representing the relative position of the satellite with respect to the electronic device 101. In the first screen 201, the relative position of the satellite may be located outside the area of the visual object 215 representing the designated range. For example, the first screen 201 may include a visual object 230 including an area of the designated range and extending to the visual object 220 within a circle in which the visual object 220 moves. The visual object 230 may represent a direction for changing the position of the satellite to within the designated range (or the first range 217). For example, referring to the first screen 201, in a case that the visual object 220 representing the position of the satellite is displayed in a right part outside the designated range, the visual object 230 may include an indicator pointing to the right (or clockwise). In other words, the visual object 230 may represent a visual object for intuitively displaying a distance between the visual object 215 representing the designated range and the visual object 220 representing the position of the satellite. For example, the first screen 201 may include a visual object 240 including text for guiding movement in the direction. In an example of FIG. 8A, the visual object 240 of the first screen 201 may include the text (e.g., Turn right to face the satellite) indicating to rotate to the right (or clockwise).

Referring to the example 802, according to an embodiment, the electronic device 101 may display the second screen 202 changed from the first screen 201 based on identifying that the azimuth angle is within the first range 217. For example, in a state in which the first screen 201 is displayed, the electronic device 101 may display the second screen 202 changed from the first screen 201 based on the azimuth outside the first range 217 being changed to within the first range 217 according to the movement of the electronic device 101. For example, the movement may include rotation for changing the azimuth angle. The second screen 202 may represent a screen for guiding to hold an orientation of the electronic device 101.

For example, the second screen 202 may include the visual object 210 representing the reference position. For example, the second screen 202 may include the visual object 215 extending from the reference position and representing the designated range including the first range 217. For example, the visual object 215 of the second screen 202 may be displayed brighter than the visual object 215 of the first screen 201. The visual object 215 representing the designated range may be displayed in a fixed state on the second screen 202. For example, even if the electronic device 101 moves in the direction indicated by the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the first screen 201, the visual object 220 representing the relative position of the satellite may move according to the movement of the electronic device 101. The designated range may represent an area wider than the first range 217. In other words, the first range 217 may represent a virtual area included in the designated range and not displayed on the second screen 202. However, the embodiment of the present disclosure is not limited thereto. For example, the visual object 215 may further include another visual object representing the first range 217. For example, the second screen 202 may include the visual object 220 representing the relative position of the satellite with respect to the electronic device 101. In the second screen 202, the relative position of the satellite may be located within the first range 217 of the visual object 215 representing the designated range. For example, the second screen 202 may include the visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202, the visual object 240 may further include another text representing a transmission/reception state, together with the text for guiding to hold the orientation. For example, in the example of the second screen 202, the visual object 240 may further include the other text (e.g., sending messages) representing that it is in the transmission state.

In addition, referring to the example 803, according to an embodiment, the electronic device 101 may display the second screen 202-1 changed from the first screen 201 based on identifying that the azimuth angle is within the first range 217. Like the second screen 202, the second screen 202-1 may represent a screen for guiding to hold the orientation of the electronic device 101.

For example, unlike the second screen 202, the second screen 202-1 may include a visual object 245 displayed in a floated (or pop-up) state with respect to another software application (e.g., a software application to display a home screen) while a software application for satellite communication (e.g., the pointing application 341 or the emergency call application 342 of FIG. 3) is executed in a background. For example, the visual object 245 may include a visual object 245-1 in which the visual objects 210, 215, 220, and 250 of the second screen 202 are simplified, and a visual object 245-2 corresponding to the visual object 240 including text for guiding to hold the position of the electronic device 101. For example, the visual object 245 may be displayed on an upper portion of a display area of the electronic device 101. However, the embodiment of the present disclosure is not limited thereto, and may be displayed through a different shape (e.g., a visual object formed long in a vertical direction, unlike the visual object 245 formed long in a horizontal direction) in another portion (e.g., a lower end, a middle end, or a side surface) of the display area.

In FIG. 8A, an example is displayed, in which the second screen 202 (or the second screen 202-1) is displayed according to the operation 505 and the operation 515 as the azimuth angle is changed, after the first screen 201 is displayed as the operation 510 is performed, but the embodiment of the present disclosure is not limited thereto. For example, the electronic device 101 may skip displaying the first screen 201 and display the second screen 202 (or the second screen 202-1) based on identifying that the azimuth angle is within the first range 217 in the operation 505 performed before performing the operation 510. For example, the electronic device 101 may display the second screen 202 (or the second screen 202-1) based on identifying that the azimuth angle is within the first range 217 in a state in which the software application is executed.

In addition, although omitted in FIG. 8A for convenience of explanation, the electronic device 101 may display a first screen 201-1 in which the visual object 250 is further displayed with respect to the first screen 201 while changing from the first screen 201 to the second screen 202 (or the second screen 202-1). For specific content related to this, FIG. 8B may be referred to.

FIG. 8B illustrates examples 804, 805, and 806 of the first screen 201 and the first screen 201-1 displayed in the operation 510, and the second screen 202 displayed in the operation 515.

Referring to the example 804, the electronic device 101 may display the first screen 201. Content with respect to the first screen 201 of FIG. 8B may be substantially applied in the same manner as the content with respect to the first screen 201 of FIG. 8A. According to an embodiment, a position at which the visual object 220 representing the relative position of the satellite with respect to the electronic device 101 is displayed may be changed based on a change in the azimuth angle according to the movement of the electronic device 101 in a state in which the first screen 201 is displayed. For example, based on movement (or rotation) in a direction (e.g., right or clockwise) in which the electronic device 101 guides in the first screen 201, the position of the visual object 220 may be changed from outside the designated range of the visual object 215 to within the designated range. Referring to the example 805, the electronic device 101 may display the first screen 201-1 further including the visual object 250 representing that the azimuth angle is located within the designated range. In other words, the first screen 201-1 may represent a screen further including the visual object 250 with respect to the first screen 201. Referring to the example 806, the electronic device 101 may display the second screen 202 changed from the first screen 201-1. For example, the second screen 202 may include the visual object 220 located within the first range 217 of the designated range based on the movement of the electronic device 101. Content with respect to the second screen 202 of FIG. 8B may be substantially applied in the same manner as the content with respect to the second screen 202 of FIG. 8A.

According to an embodiment, the electronic device 101 may display the visual object 215 having a brightness identified based on the visual object 220 representing the relative position of the satellite. For example, the brightness of the visual object 215 may become brighter as the visual object 220 representing the relative position of the satellite approaches within the first range 217. For example, since the visual object 220 is located outside the designated range of the visual object 215, the brightness of the visual object 215 in the first screen 201 may be a first brightness. In addition, since the visual object 220 is within the designated range of the visual object 215 and is located outside the first range 217, the brightness of the visual object 215 in the first screen 201-1 may be a second brightness brighter than the first brightness. In addition, since the visual object 220 is located within the first range 217, the brightness of the visual object 215 in the second screen 202 may be a third brightness brighter than the second brightness. In the above-described example, an example of changing the brightness of the visual object 215 is described, but the embodiment of the present disclosure is not limited thereto. According to an embodiment, the electronic device 101 may change the number of pixels of the display used to display the visual object 215 based on the visual object 220 representing the relative position of the satellite. For example, the number of pixels used to display the visual object 215 may increase as the visual object 220 approaches within the first range 217. The increase in the number may represent that the visual object 215 is displayed thickly.

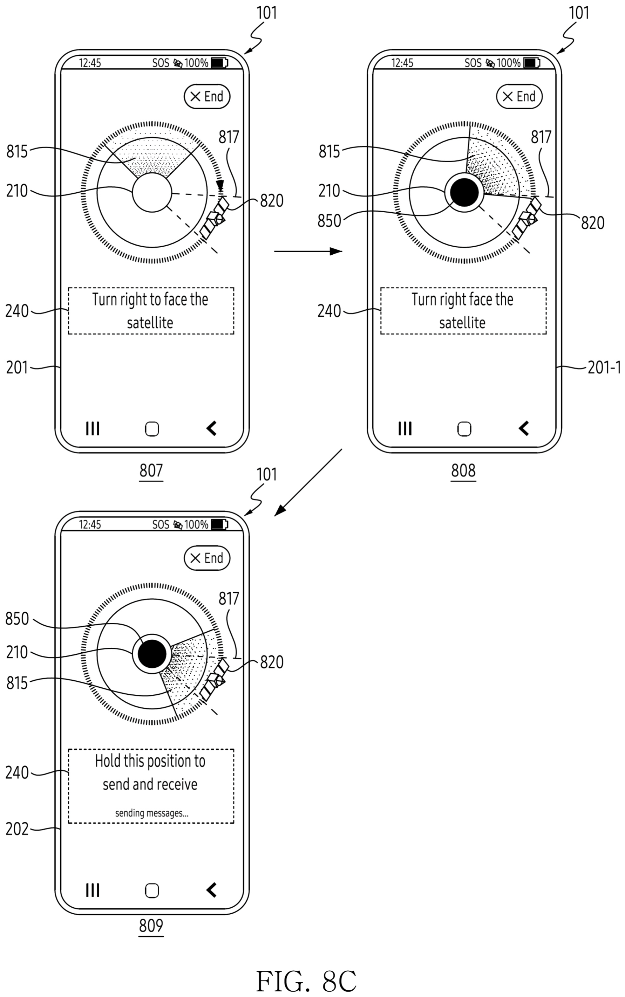

Referring to the above, the electronic device 101 may display screens that are changed according to a position of the satellite. The screens may display the satellite as if the satellite moves according to movement (or rotation) of the electronic device 101 through the visual object 220 representing the relative position of the satellite and the visual object 215 fixed in a specific direction. Accordingly, the designated range and the first range 217 defined with respect to the actual position of the satellite may be displayed based on a direction of the electronic device 101. However, as illustrated in FIG. 8C below, screens including a visual object 820 representing the actual position of the satellite and a visual object 815 variably displayed according to the direction of the electronic device 101 may also be used.

FIG. 8C illustrates examples 807, 808, and 809 of the first screen 201 and the first screen 201-1 displayed in the operation 510, and the second screen 202 displayed in the operation 515.

Referring to the example 807, the electronic device 101 may display the first screen 201. Unlike the visual object 220 included in the first screen 201 of FIG. 8B, the visual object 820 included in the first screen 201 of FIG. 8C may be displayed in a fixed state in an area corresponding to the actual position of the satellite. Also, the first screen 201 of FIG. 8C may include the visual object 815 representing the direction of the electronic device 101. For example, unlike the visual object 215 of FIG. 8C, the visual object 815 of FIG. 8B may be displayed at a position changed according to movement (or rotation) of the electronic device 101. For example, in a case that the electronic device 101 rotates to the right (or clockwise), the visual object 815 may rotate to the right (or clockwise). In addition, a first range 817 may be defined with respect to the visual object 815 representing the actual position of the satellite, unlike the first range 217 included in the visual object 215 of FIG. 8B. Referring to the example 808, the electronic device 101 may display the first screen 201-1 including a visual object 850 further representing that the visual object 815 representing the direction of the electronic device 101 starts to be located within the first range 817. In other words, the first screen 201-1 may represent a screen further including the visual object 850 with respect to the first screen 201 of the example 807. Referring to the example 809, the electronic device 101 may display the second screen 202 changed from the first screen 201-1 of the example 808. For example, the second screen 202 may represent a state in which the direction of the electronic device 101 is located within the first range 817, based on the movement of the electronic device 101. For example, a middle portion of the designated range may be aligned with the visual object 820.

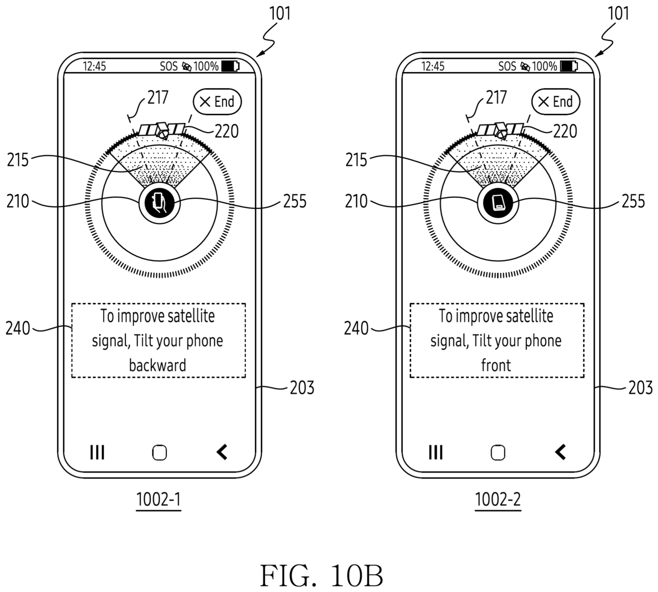

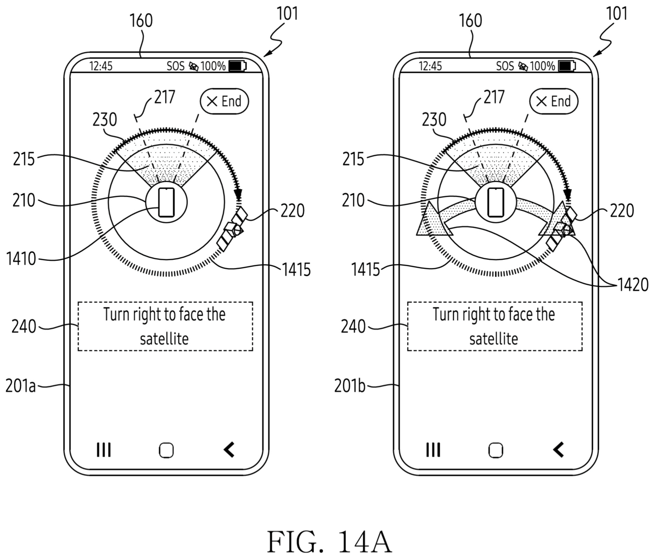

Referring to the above, for the screens of FIG. 2, the screens of FIG. 8A, the screens of FIG. 8B, screens of FIG. 10B, screens of FIG. 11B, and screens of FIG. 14A to 16B below, an example using the visual object 220 representing the relative position of the satellite is illustrated, but the embodiment of the present disclosure is not limited thereto. For example, the visual object 820 representing the actual position of the satellite may also be used, such as the screens of FIG. 8C.

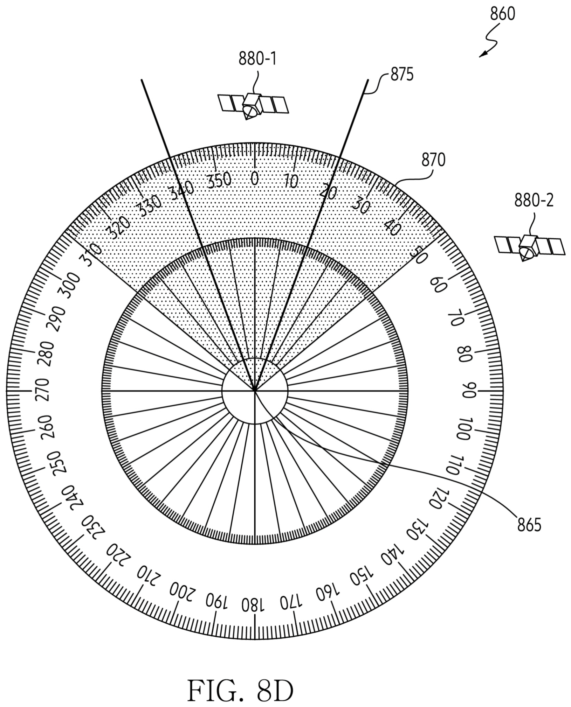

FIG. 8D illustrates an example 860 of satellites 880-1 and 880-2 located with respect to a designated range 870 and a first range 875 based on a position 865 of the electronic device 101. For example, the designated range 870 may represent the designated range of the visual object 215 in the screen of FIGS. 8A and 8B. For example, the first range 875 may represent the first range 217 in the screen of FIGS. 8A and 8B. In FIG. 8D, the first range 875 having a length (or a size) of 40° and the designated range 870 having a length (or a size) of 100° are illustrated for convenience of description, but the embodiment of the present disclosure is not limited thereto. For example, the length of the first range 875 and the designated range 870 may be changed. In an example of FIG. 8D, the first range 875 may be set to 340° (or -20°) to 20°. The designated range 870 may be set to 310° (or -50°) to 50°.

Referring to the example 860, the electronic device 101 may identify a first azimuth angle of the electronic device 101 with respect to the satellite 880-1 as about 0°. For example, the electronic device 101 may identify that the first azimuth angle is within the first range 875. The electronic device 101 may display the second screen 202 (or the second screen 202-1) of FIG. 8A or the second screen 202 of FIG. 8B based on identifying that the first azimuth angle is within the first range 875. In addition, referring to the example 860, the electronic device 101 may identify a second azimuth angle of the electronic device 101 with respect to the satellite 880-2 as about 60°. For example, the electronic device 101 may identify that the second azimuth is outside the designated range 870. The electronic device 101 may display the first screen 201 of FIG. 8A or the first screen 201 of FIG. 8B based on identifying that the second azimuth is outside the designated range 870.

FIG. 9 illustrates an example of a method of displaying screens for aligning a direction of an electronic device with a position of a satellite based on quality of a signal.

The method of FIG. 9 may be performed by the electronic device 101 of FIG. 3. For example, the method may be controlled by processor 120. The method of FIG. 9 may be performed before the operation 515 of FIG. 5 is performed. For example, an electronic device 101 may display a second screen (e.g., the second screen 202 of FIG. 2, the second screen 202 of FIG. 8A, or the second screen 202 of FIG. 8B) based on identifying that the azimuth angle is within the first range. According to an embodiment, even if the azimuth angle is identified within the first range, in a case that quality of a signal radiated by the electronic device 101 is less than or equal to reference quality, the electronic device 101 may skip displaying the second screen and identify whether the elevation angle is within the second range. In other words, the electronic device 101 may perform the operation 530 while omitting a performance of the operation 515 and the operation 520.

FIG. 9 illustrates an example 900 of a signal flowchart in which the electronic device 101 identifies the quality of the signal radiated (or transmitted) from the electronic device 101. Referring to the example 900, the electronic device 101 may identify the quality of the signal based on identifying that the azimuth angle is within the first range. For example, the electronic device 101 may identify the quality of the signal based on API 920 called using a software application (or a software application for satellite communication) 910 for connecting with the satellite. For example, the API 920 may be included in SDK for supporting a satellite communication service. For example, the API 920 may identify the quality of the signal radiated by the electronic device 101 based on being called by the software application 910. The API 920 may provide information on the quality of the signal. For example, the information may include a level of the quality of the signal. For example, the level may be one of a plurality of levels (e.g., five levels).

According to an embodiment, the electronic device 101 may identify whether the level is less than a reference level. The reference level may be one of the plurality of levels. For example, the electronic device 101 may identify whether the elevation angle is within the second range based on identifying that the level is less than the reference level. In other words, the electronic device 101 may perform the operation 530. For example, the electronic device 101 may display the third screen based on identifying that the elevation angle is within the second range. Alternatively, the electronic device 101 may display the second screen based on identifying that the elevation angle is outside the second range.

For example, the electronic device 101 may display the second screen based on identifying that the level is greater than or equal to the reference level. In other words, the electronic device 101 may perform the operation 515. Thereafter, the electronic device 101 may identify whether a connection with the satellite is established within designated time in the operation 520.

In FIG. 9, an example in which the API 920 transmits the information on the quality of the signal once is illustrated, but the embodiment of the present disclosure is not limited thereto. The API 920 according to an embodiment of the present disclosure may transmit the information on the quality of the signal a plurality of times based on an event. For example, the event may include a case in which the level of the quality of the signal is changed, a case in which the software application 910 requires, or a case in which a timer (or a specific time interval) is expired.

FIGS. 10A to 10C illustrate examples of a method of adjusting an elevation angle of an electronic device with respect to a satellite to be located within a second range.

FIG. 10A illustrates examples 1001, 1002, and 1003 of a second screen 202 displayed in operation 515, a third screen 203 displayed in operation 535, and a fourth screen 204 displayed in operation 525. The examples 1001, 1002, and 1003 according to the method may represent examples with respect to the operation 515, the operation 525, operation 530, and the operation 535.

Referring to the example 1001, an electronic device 101 may display the second screen 202 based on identifying that the azimuth angle is within the first range. For example, the electronic device 101 may display the second screen 202 through a display (e.g., the display 320 of FIG. 3).

For example, the second screen 202 may represent a screen for guiding to hold an orientation of the electronic device 101. The orientation of the electronic device 101 may be related to the azimuth angle. For example, the second screen 202 may include a visual object 210 representing a reference position. For example, the second screen 202 may include a visual object 215 extending from the reference position and representing a designated range including the first range 217. For example, the visual object 215 of the second screen 202 may be displayed brighter than the visual object 215 of the first screen 201. The visual object 215 representing the designated range may be displayed in a fixed state on the second screen 202. For example, even if the electronic device 101 moves in a direction indicated by a visual object 230 and a visual object 240, the visual object 215 may be displayed in a fixed state to face a specific portion (e.g., an upper portion) of the display of the electronic device 101. This is because the designated range and the first range 217 are areas identified based on an actual position of the satellite. In the first screen 201, a visual object 220 representing a relative position of the satellite may move according to the movement of the electronic device 101. The designated range may represent an area wider than the first range 217. In other words, the first range 217 may represent a virtual area included in the designated range and not displayed on the second screen 202. However, an embodiment of the present disclosure is not limited thereto. For example, the visual object 215 may further include another visual object representing the first range 217. For example, the second screen 202 may include the visual object 220 representing the relative position of the satellite with respect to the electronic device 101. In the second screen 202, the relative position of the satellite may be located within the first range 217 of the visual object 215 representing the designated range. For example, the second screen 202 may include a visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202, the visual object 240 may further include another text representing a transmission/-reception state, together with the text for guiding to hole the orientation. For example, in the example of the second screen 202, the visual object 240 may further include the other text (e.g., sending messages) representing that it is in the transmission state.

Referring to the example 1001, the electronic device 101 may identify whether a connection with the satellite is established in a state in which the second screen 202 is displayed. For example, the electronic device 101 may identify whether data is transmitted or received through a communication circuit (e.g., the communication circuit 330 of FIG. 3) within specified time. The data may represent data transmitted or received when the connection with the satellite is established. For example, the electronic device 101 may identify whether the elevation angle is within the second range based on identifying that the connection with the satellite is not established.

Referring to the example 1002, the electronic device 101 may display the third screen 203 changed from the second screen 202 based on identifying that the elevation angle is outside the second range. For example, the electronic device 101 may display the third screen 203 through the display (e.g., the display 320 of FIG. 3).

For example, the third screen 203 may represent a screen for adjusting the elevation angle outside the second range to be located within the second range. For example, the third screen 203 may include the visual object 210 representing the reference position. For example, the third screen 203 may include the visual object 215 extending from the reference position and representing the designated range including the first range 217. The visual object 215 representing the designated range may be displayed in a fixed state on the third screen 203. For example, even if the electronic device 101 moves in the direction indicated by the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the third screen 203, the visual object 220 representing the relative position of the satellite may move according to the movement of the electronic device 101. The designated range may represent an area wider than the first range 217. In other words, the first range 217 may represent a virtual area included in the designated range and not displayed on the third screen 203. However, the embodiment of the present disclosure is not limited thereto. For example, the visual object 215 may further include another visual object representing the first range 217. For example, the third screen 203 may include the visual object 220 representing the relative position of the satellite with respect to the electronic device 101. In the third screen 203, the relative position of the satellite may be located within the first range 217 of the visual object 215 representing the designated range. For example, the third screen 203 may include a visual object 255 for guiding a tilting direction for changing the elevation angle of the electronic device 101. For example, the visual object 255 may be displayed in the visual object 210 representing the reference position. For example, the visual object 255 may be displayed in a state of being at least partially superimposed on the visual object 210. However, the embodiment of the present disclosure is not limited thereto. For example, the third screen 203 may display the visual object 255 on at least a partial area of the third screen 203. In addition, for example, the third screen 203 may display the visual object 255 together, within an area in which the visual object 240 including text is displayed. For example, the visual object 255 for guiding the tilting direction may include an animation representing the tilting direction. For example, the tilting direction may include up-tilting for increasing the elevation angle or down-tilting for reducing the elevation angle. The third screen 203 may include the visual object 240 including text for guiding another movement of the electronic device in the tilting direction. For example, the other movement may include rotation in the tilting direction (e.g., front (or up-tilting) or backward (or down-tilting)). In the example of FIG. 2, referring to the third screen 203, the visual object 240 may include the text (e.g., To improve satellite signal, tilt your phone backward) for guiding the down-tilting for reducing the elevation angle.

Referring to the example 1003, the electronic device 101 may display the fourth screen 204 based on identifying that the connection with the satellite is established. For example, the electronic device 101 may display the fourth screen 204 through the display (e.g., the display 320 of FIG. 3). For example, the fourth screen 204 may include a visual object 1030 representing the data of a message type related to an emergency rescue. For example, as the fourth screen 204 executes a software application (e.g., a message application) that provides the visual object 1030, a software application related to the satellite communication (e.g., the pointing application 341 or the emergency call application 342 of FIG. 3) may be executed in a background. As the software application related to the satellite communication is executed in the background, a visual object 245 in which the second screen 202 is simplified may be displayed through a portion (e.g., an upper portion) of a display area of the display. For example, the visual object 245 may include a visual object 245-1 in which the visual objects 210, 215, 220, and 250 of the second screen 202 are simplified, and a visual object 245-2 corresponding to the visual object 240 including text for guiding to hold the position of the electronic device 101. In the example 1003, as the software application related to the satellite communication is executed in the background, the fourth screen 204 displaying the simplified visual object 245 in a floated (or pop-up) state is illustrated as an example, but the present disclosure is not limited thereto. For example, the fourth screen 204 may include the visual object 1030 displayed in a floated state in a state in which the second screen 202 is displayed.

FIG. 10B illustrates examples 1002-1 and 1002-2 with respect to the third screen 203. The third screen 203 of the example 1002-1 may be understood substantially the same as the third screen 203 of the example 1002 of FIG. 10A. Referring to the example 1002-1, the visual object 240 of the third screen 203 may include the text (e.g., To improve satellite signal, tilt your phone backward) for guiding the down-tilting for reducing the elevation angle. In addition, referring to the example 1002-1, the third screen 203 may include the visual object 255 for guiding the down-tilting of the electronic device 101. For example, the visual object 255 for guiding the tilting direction may include an animation representing the down tilting. On the contrary, referring to the example 1002-2, the visual object 240 of the third screen 203 may include the text (e.g., To improve satellite signal, tilt your phone front) for guiding the up-tilting for increasing the elevation angle. In addition, referring to the example 1002-2, the third screen 203 may include the visual object 255 for guiding the up-tilting of the electronic device 101. For example, the visual object 255 for guiding the tilting direction may include an animation representing the up-tilting.

According to an embodiment, the electronic device 101 may display the third screen 203 including the visual object 240 and the visual object 255 for guiding the up-tilting based on identifying that the elevation angle is less than a third value of the second range. For example, the third value may represent a minimum value of the second range. In addition, electronic device 101 may display the third screen 203 including the visual object 240 and the visual object 255 for guiding the down-tilting based on identifying that the elevation angle is greater than or equal to a fourth value of the second range. For example, the fourth value may represent a maximum value of the second range.

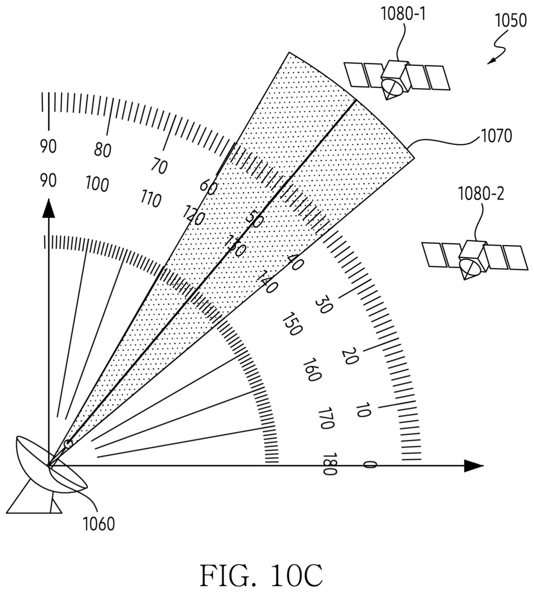

Referring to the above, the electronic device 101 may display the third screen 203 including a visual object for guiding the tilting direction identified according to the elevation angle. In this case, for a relationship between the elevation angle and the second range, FIG. 10C may be referred to.

FIG. 10C illustrates an example 1050 of satellites 1080-1 and 1080-2 located with respect to a second range 1070 based on a position 1060 of the electronic device 101. For example, the second range 1070 may represent a reference range for the elevation angle related to the third screen 203 of FIG. 2 or the third screen 203 of FIGS. 10A and 10B. In FIG. 10C, the second range 1070 having a length of 20° is illustrated for convenience of explanation, but the embodiment of the present disclosure is not limited thereto. For example, the length of the second range 1070 may be changed. In an example of FIG. 10C, the second range 1070 may be set to 40° to 60°.

Referring to the example 1050, the electronic device 101 may identify a first elevation angle of the electronic device 101 with respect to the satellite 1080-1 as about 48°. For example, the electronic device 101 may identify that the first elevation angle is within the second range 1070. The electronic device 101 may display the second screen 202 changed from the third screen 203 based on identifying that the first elevation angle is within the second range 1070. In other words, the electronic device 101 may perform operation 540 by identifying that the first elevation angle is changed to the second range 1070 in the operation 530 performed after performing the operation 535 of FIG. 5. Alternatively, the electronic device 101 may skip displaying the third screen 203 and maintain displaying the second screen 202 by identifying that the first elevation angle is within the second range 1070 in the operation 530 performed after the operation 520 of FIG. 5. In addition, referring to the example 1050, the electronic device 101 may identify a second elevation angle of the electronic device 101 with respect to the satellite 1080-2 as about 26°. For example, the electronic device 101 may identify that the second elevation angle is outside the second range 1070. Based on identifying that the second elevation angle is outside the second range 1070, the electronic device 101 may display the third screen 203 of FIG. 10A or the third screen 203 of FIG. 10B (e.g., the third screen 203 of the example 1002-1 in which down-tilting is required).

FIG. 11 illustrates an example of screens according to whether a connection between an electronic device and a satellite is established.

FIG. 11 illustrates examples 1101, 1102, 1103, and 1104 of a third screen 203 displayed in operation 535, a second screen 202 displayed in operation 540, a fourth screen 204 displayed in operation 525, and a second screen 202 displayed in operation 555.

Referring to the example 1101, an electronic device 101 may display the third screen 203 based on identifying that the elevation angle is outside the second range. For example, the electronic device 101 may display the third screen 203 through a display (e.g., the display 320 of FIG. 3). For example, the electronic device 101 may identify whether the elevation angle is within the second range in a state in which the third screen 203 is displayed.

For example, the third screen 203 may represent a screen for adjusting the elevation angle outside the second range to be located within the second range. For example, the third screen 203 may represent a screen for adjusting the elevation angle outside the second range to be located within the second range. For example, the third screen 203 may include a visual object 210 representing a reference position. For example, the third screen 203 may include a visual object 215 extending from the reference position and representing a designated range including a first range 217. The visual object 215 representing the designated range may be displayed in a fixed state on the third screen 203. For example, even if the electronic device 101 moves in a direction indicated by a visual object 230 and a visual object 240, the visual object 215 may be displayed in a fixed state to face a specific portion (e.g., an upper portion) of the display of the electronic device 101. This is because the designated range and the first range 217 are areas identified based on an actual position of the satellite. In the third screen 203, a visual object 220 representing a relative position of the satellite may move according to the movement of the electronic device 101. The designated range may represent an area wider than the first range 217. In other words, the first range 217 may represent a virtual area included in the designated range and not displayed on the third screen 203. However, an embodiment of the present disclosure is not limited thereto. For example, the visual object 215 may further include another visual object representing the first range 217. For example, the third screen 203 may include the visual object 220 representing the relative position of the satellite with respect to the electronic device 101. In the third screen 203, the relative position of the satellite may be located within the first range 217 of the visual object 215 representing the designated range. For example, the third screen 203 may include a visual object 255 for guiding a tilting direction for changing the elevation angle of the electronic device 101. For example, the visual object 255 may be displayed in the visual object 210 representing the reference position. For example, the visual object 255 may be displayed in a state of being at least partially superimposed on the visual object 210. However, the embodiment of the present disclosure is not limited thereto. For example, the third screen 203 may display the visual object 255 on at least a partial area of the third screen 203. In addition, for example, the third screen 203 may display the visual object 255 together within an area in which the visual object 240 including text is displayed. For example, the visual object 255 for guiding the tilting direction may include an animation representing the tilting direction. For example, the tilting direction may include up-tilting for increasing the elevation angle or down-tilting for reducing the elevation angle. The third screen 203 may include the visual object 240 including text for guiding another movement of the electronic device in the tilting direction. For example, the other movement may include rotation in the tilting direction (e.g., front (or up-tilting) or backward (or down-tilting)). In the example of FIG. 2, referring to the third screen 203, the visual object 240 may include the text (e.g., To improve satellite signal, tilt your phone backward) for guiding the down-tilting for reducing the elevation angle.

Referring to example 1102, the electronic device 101 may display the second screen 202. For example, the electronic device 101 may display the second screen 202 changed from the third screen 203 based on the elevation angle outside the second range being changed to within the second range according to movement of the electronic device 101, in a state in which the third screen 203 is displayed. For example, the movement of the electronic device 101 may include rotation in the tilting direction.

For example, the second screen 202 may represent a screen for guiding to hold an orientation of the electronic device 101. The orientation of the electronic device 101 may be related to the elevation angle.

For example, the second screen 202 may include the visual object 210 representing the reference position. For example, the second screen 202 may include the visual object 215 extending from the reference position and representing the designated range including the first range 217. For example, the visual object 215 of the second screen 202 may be displayed brighter than the visual object 215 of the first screen 201. The visual object 215 representing the designated range may be displayed in a fixed state on the second screen 202. For example, even if the electronic device 101 moves in the direction indicated by the visual object 230 and the visual object 240, the visual object 215 may be displayed in a fixed state to face the specific portion (e.g., the upper portion) of the display of the electronic device 101. This is because the designated range and the first range 217 are areas identified based on the actual position of the satellite. In the first screen 201, the visual object 220 representing the relative position of the satellite may move according to the movement of the electronic device 101. The designated range may represent an area wider than the first range 217. In other words, the first range 217 may represent a virtual area included in the designated range and not displayed on the second screen 202. However, the embodiment of the present disclosure is not limited thereto. For example, the visual object 215 may further include another visual object representing the first range 217. For example, the second screen 202 may include the visual object 220 representing the relative position of the satellite with respect to the electronic device 101. In the second screen 202, the relative position of the satellite may be located within the first range 217 of the visual object 215 representing the designated range. For example, the second screen 202 may include the visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202, the visual object 240 may further include another text representing a transmission/reception state, together with the text for guiding to hold the orientation. For example, in the example of the second screen 202, the visual object 240 may further include the other text (e.g., sending messages) representing that it is in the transmission state.

Referring to the example 1103, the electronic device 101 may display the fourth screen 204 based on identifying that a connection with the satellite is established in a state in which the second screen 202 is displayed. For example, the electronic device 101 may identify whether the connection with the satellite is established in a state in which the second screen 202 is displayed. For example, the electronic device 101 may display the fourth screen 204 changed from the second screen 202 through the display (e.g., the display 320 of FIG. 3) based on identifying that the connection with the satellite is established.

For example, the fourth screen 204 may include a visual object 1130 representing the data of a message type related to an emergency rescue. For example, as the fourth screen 204 executes a software application (e.g., a message application) that provides the visual object 1030, a software application related to the satellite communication (e.g., the pointing application 341 or the emergency call application 342 of FIG. 3) may be executed in a background. As the software application related to the satellite communication is executed in the background, a visual object 245 in which the second screen 202 is simplified may be displayed through a portion (e.g., an upper portion) of a display area of the display. For example, the visual object 245 may include a visual object 245-1 in which the visual objects 210, 215, 220, and 250 of the second screen 202 are simplified, and a visual object 245-2 corresponding to the visual object 240 including text for guiding to hold the position of the electronic device 101. In the example 1103, as the software application related to the satellite communication is executed in the background, the fourth screen 204 displaying the simplified visual object 245 in a floated (or pop-up) state is illustrated as an example, but the present disclosure is not limited thereto. For example, the fourth screen 204 may include the visual object 1130 displayed in a floated state in a state in which the second screen 202 is displayed.

Referring to the example 1104, the electronic device 101 may display a visual object 1190 for notifying that the connection has failed in a state in which the second screen 202 is displayed. For example, the electronic device 101 may display the floated (or popped-up) visual object 1190 in a state of being at least partially superimposed on the second screen 202, through the display (e.g., the display 320 of FIG. 3). For example, the visual object 1190 may include text representing that transmission or reception is impossible. In addition, for example, the visual object 1190 may include a visual object in which the second screen 202 is simplified. However, the embodiment of the present disclosure may not be limited to the visual object 1190 of the example 1104. For example, the visual object representing the failure of the connection may further include text for notifying that a signal radiated by the electronic device 101 is blocked. In addition, for example, the visual object representing the failure of the connection may further include text requesting a clear view of the sky where the satellite is located. In the above-described example, examples of various texts included in the visual object representing the failure of the connection are described, but the embodiment of the present disclosure is not limited thereto. For example, the visual object representing the failure of the connection may include other information (e.g., an image) representing substantially the same meaning. In addition, in the example 1104, the visual object 1190 displayed in a state in which the second screen 202 is displayed is illustrated, but the embodiment of the present disclosure is not limited thereto. For example, the visual object 1190 may be displayed within another screen (e.g., the initial screen) with the display of the second screen 202 being stopped.

FIG. 12 illustrates an example of a method of adjusting a first range with respect to an azimuth angle.

FIG. 12 illustrates an example 1200 with respect to the method in which operations 550 and 560 are performed.

The example 1200 illustrates a satellite 1280 located with respect to a designated range 1270 and a first range 1275 based on a position 1210 of an electronic device 101. For example, the designated range 1270 may represent a designated range of the visual object 215 in the screen of FIGS. 8A and 8B. For example, the first range 1275 may represent the first range 217 in the screen of FIGS. 8A and 8B. In FIG. 12, the first range 1275 having a length of 40° and the designated range 1270 having a length of 100° are illustrated for convenience of description, but an embodiment of the present disclosure is not limited thereto. For example, the length of the first range 1275 and the designated range 1270 may be changed. In an example of FIG. 12, the first range 1275 may be set to 340° (or -20°) to 20°. The designated range 1270 may be set to 310° (or -50°) to 50°.

Referring to the example 1200, the electronic device 101 may identify a first azimuth angle of the electronic device 101 with respect to the satellite 1280 as about 15°. For example, the electronic device 101 may identify that the first azimuth angle is within the first range 1275. The electronic device 101 may display the second screen 202 (or the second screen 202-1) of FIG. 8A or the second screen 202 of FIG. 8B based on identifying that the first azimuth angle is within the first range 1275. In other words, the electronic device 101 may display the second screen 202 in operation 540. Thereafter, in the operation 545, the electronic device 101 may identify whether a connection with the satellite is established. In this case, the electronic device 101 may identify whether the length of the first range 1275 is less than a reference length in the operation 550, based on identifying that the connection with the satellite is not established. For example, the reference length may be 20°. In the example of FIG. 12, since the length is 40°, the electronic device 101 may change the length of the first range 1275 based on identifying that the length is equal to or greater than the reference length. Referring to FIG. 12, the electronic device 101 may change the length of the first range 1275 to 20°. Changing the first range 1275 may be understood in the same manner as identifying a third range 1275-1, which is a new reference range. The electronic device 101 may identify the third range 1275-1 having a length of 20°. According to an embodiment, the electronic device 101 may identify whether the azimuth angle is within the third range 1275-1. Referring to the example of FIG. 12, as it is identified that the azimuth angle of the electronic device 101 with respect to the satellite 1280 is outside the third range 1275-1, the first screen 201 of FIG. 2 (or the first screen 201 of FIG. 8A or the first screen 201 of FIG. 8B) for adjusting the azimuth angle may be displayed.

As described above, in FIG. 12, for convenience of explanation, an example in which the first range 1270 is adjusted is described, but the embodiment of the present disclosure is not limited thereto. For example, the second range for the elevation angle may be changed to a fourth range having a length smaller than the length of the second range. The fourth range may be included in a reference range for the elevation angle. In addition, for example, in a case of identifying with respect to each of the first range and the second range in the operation 550, the electronic device 101 may adjust the first range to the third range and the second range to the fourth range.

Referring to the above, the electronic device 101 may more precisely align a direction of the electronic device 101 with a position of the satellite by adjusting a length of the reference range (e.g., the first range for the azimuth angle and the second range for the elevation angle). Accordingly, the electronic device 101 may perform a communication with the satellite based on improved directivity and stability.

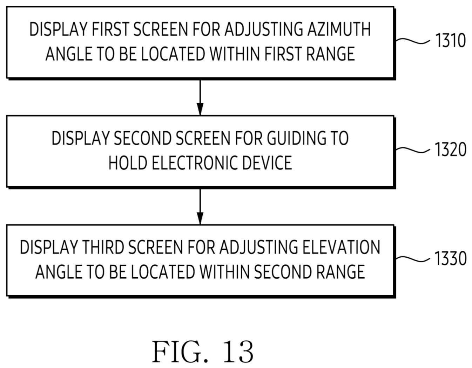

FIG. 13 illustrates an operation flow of a method for displaying screens for aligning a direction of an electronic device with a position of a satellite.

The method of FIG. 13 may be performed by the electronic device 101 of FIG. 3. For example, at least one operation of the method may be controlled by a processor 120. The alignment may represent that a direction of the electronic device 101 is positioned within a reference range and a position of the satellite. For example, the reference range may include a first range for an azimuth angle of the electronic device 101 with respect to the satellite and a second range for an elevation angle of the electronic device 101 with respect to the satellite. For example, the first range may represent a range with respect to the azimuth angle based on the position of the satellite. For example, the second range may represent a range with respect to the elevation angle based on the position of the satellite. For example, the azimuth angel (or the azimuth angle of the electronic device 101 with respect to the satellite) may represent a difference between an angle between a vector facing the direction of the electronic device 101 projected in a reference plane and a vector facing a reference direction (e.g., true north), and an angle between a vector facing the direction of the satellite projected in the reference plane and the vector facing the reference direction. For example, the reference plane may represent a horizontal plane including the electronic device 101 and the vector facing the reference direction. For example, the reference direction may include a true north, a magnetic north, or a grid north. For example, the elevation angle (or the elevation angle of the electronic device 101 with respect to the satellite) may represent a difference between an angle between the direction of the electronic device 101 and the reference plane, and an angle between a vector facing the position of the satellite and the reference plane.

Referring to FIG. 13, in operation 1310, the electronic device 101 may display a first screen for adjusting the azimuth angle to be located within the first range. For example, the electronic device 101 may display the first screen for adjusting the azimuth angle with respect to the satellite to be located within the first range through a display (e.g., the display 320 of FIG. 3).

According to an embodiment, the electronic device 101 may execute a software application for connecting with the satellite before the operation 1310. The software application for connecting with the satellite may be referred to as a software application for satellite communication or a satellite communication application. For example, the electronic device 101 may execute the software application based on at least a portion of an input of a user.

According to an embodiment, the electronic device 101 may identify a position of the satellite in a state in which the software application is executed. For example, the electronic device 101 may identify the position of the satellite through a software development kit (SDK) for supporting a satellite communication service. The SDK is merely an example for convenience of explanation, and the embodiment of the present disclosure is not limited thereto. For example, the position of the satellite may be identified through an application programming interface (API) called by the software application. The API may be included in the SDK. For example, the position of the satellite may be identified (or defined) based on a vector facing a direction of the satellite.

According to an embodiment, the electronic device 101 may identify a difference between the identified position of the satellite and the direction of the electronic device 101. For example, the electronic device 101 may identify the direction of the electronic device 101. For example, the electronic device 101 may identify a first direction identified by a sensor included in the electronic device 101 and a second direction in which an antenna of the electronic device 101 indicates. The second direction (or a direction in which the first direction and the second direction are combined) in which the first direction is considered may be referred to the direction of the electronic device 101. For example, the electronic device 101 may identify the azimuth angle and the elevation angle of the electronic device 101 with respect to the satellite based on the direction.

According to an embodiment, the electronic device 101 may identify whether the azimuth angle is within the first range. For example, the electronic device 101 may identify whether the azimuth angle is included in the first range. For example, the first range may represent a reference range for the azimuth angle for the electronic device 101 to establish the connection (or to perform communication) with the satellite. In other words, in a case that the azimuth angle is located within the first range, the electronic device 101 may be relatively likely to establish the connection with the satellite.

For example, the first range may be identified based on information related to the antenna of the electronic device 101. The antenna may be connected to a communication circuit (e.g., the communication circuit 330 of FIG. 3) of the electronic device 101 and may include an antenna for communicating with the satellite. For example, the information may include at least one of the number of antennas, directivity of the antenna, a strength of a signal radiated through the antenna, or a frequency band of the signal. The length may be referred to as a size.

According to an embodiment, the electronic device 101 may display the first screen based on identifying that the azimuth angle is outside the first range. The above-described description of the first screen 201 (or the first screen 201-1) may be applied to the first screen in substantially the same manner.

According to an embodiment, in response to execution of the software application, the electronic device 101 may display an initial screen. For example, the electronic device 101 may identify the position of the satellite and identify whether the azimuth angle of the satellite of the electronic device 101 is within the first range, in a state in which the initial screen is displayed. For example, the initial screen may include a screen that performs setting for performing the connection with the satellite through the software application. Alternatively, the initial screen may include a screen including at least a portion of visual objects in which the first screen includes. The initial screen may include another visual object including text different from a visual object (e.g., a visual object 240) representing text in which the first screen includes.

In operation 1320, the electronic device 101 may display a second screen for guiding to hold the electronic device 101. For example, the electronic device 101 may display the second screen for guiding to hold an orientation of the electronic device 101 through the display (e.g., the display 320 of FIG. 3). For example, the second screen may represent a screen changed from the first screen. The orientation of the electronic device 101 may be related to the azimuth angle or the elevation angle.

According to an embodiment, the electronic device 101 may display the second screen changed from the first screen based on the azimuth outside the first range being changed to within the first range according to movement (or rotation) of the electronic device 101, in a state in which the first screen is displayed. For example, the movement may represent movement of changing the azimuth angle. Content with respect to the second screen may be substantially applied in the same manner as the content with respect to the second screen 202 (or the second screen 202-1) described above.

According to an embodiment, the electronic device 101 may identify whether a connection for transmitting and receiving data with the satellite is established in a state in which the second screen is displayed. For example, the electronic device 101 may identify whether the data is transmitted or received through the communication circuit within designated time in a state in which the second screen is displayed. For example, the designated time may be identified based on at least one of performance of the communication circuit, a region (or a service region) in which the electronic device 101 is located, or time required to transmit and receive the data, such as a message. For example, as the performance of the communication circuit is better, the designated time may be shorter. Alternatively, as traffic for the satellite communication increases in the region, the designated time may be longer. Alternatively, as the time required to transmit and receive the data is longer, the designated time may be longer. However, the embodiment of the present disclosure is not limited thereto, and it may be set to a specified value by a service provider or a manufacturer of the electronic device 101 that provides an emergency rescue service through the satellite communication. For example, the data may include a message transmitted through the satellite communication, location information of the electronic device 101, or information for connection of a call. For example, in a case that the data is transmitted or received, the electronic device 101 may identify that the connection is established. Alternatively, in a case that the data is not transmitted or received, the electronic device 101 may identify that the connection is not established. According to an embodiment, the electronic device 101 may display a visual object representing the data based on identifying that the connection is established. Alternatively, the electronic device 101 may identify whether the elevation angle is within the second range based on identifying that the connection is not established.

In operation 1330, the electronic device 101 may display a third screen for adjusting the elevation angle to be located within the second range. For example, the electronic device 101 may display the third screen for adjusting the elevation angle of the electronic device 101 with respect to the satellite to be located within the second range through the display (e.g., the display 320 of FIG. 3).

According to an embodiment, the electronic device 101 may identify whether the elevation angle is within the second range based on identifying that the connection is not established within the designated time in a state in which the second screen is displayed. In other words, the electronic device 101 may display the third screen for adjusting the elevation angle based on identifying that the connection with the satellite is not established despite the azimuth angle within the first range. For example, the second range may represent the reference range for the elevation angle for the electronic device 101 to establish the connection (or perform the communication) with the satellite. In other words, in a case that the elevation angle is located within the second range, the electronic device 101 may be relatively likely to establish the connection with the satellite.

For example, the second range may be identified based on information related to the antenna of the electronic device 101. The antenna may be connected to the communication circuit (e.g., the communication circuit 330 of FIG. 3) of the electronic device 101 and may include the antenna for performing the communication with the satellite. For example, the information may include at least one of the number of antennas, the directivity of the antenna, the strength of the signal radiated through the antenna, or the frequency band of the signal. The length may be referred to as a size.

According to an embodiment, the electronic device 101 may display the third screen based on identifying that the elevation angle is outside the second range. For example, the electronic device 101 may display the third screen changed from the second screen. As for the content with respect to the third screen, the content with respect to the above-described third screen 203 may be applied substantially the same.

In addition, according to an embodiment, the electronic device 101 may display the second screen again based on identifying that the elevation angle is within the second range. For example, the electronic device 101 may display the third screen based on identifying that the elevation angle is outside the second range in a state in which the second screen is displayed. Thereafter, the electronic device 101 may display the second screen changed from the third screen based on the elevation angle being changed within the second range according to another movement in a state in which the third screen is displayed. Alternatively, the electronic device 101 may skip displaying the third screen and maintain displaying the second screen based on identifying that the elevation angle is within the second range in a state in which the second screen display is displayed. According to an embodiment, the electronic device 101 may identify whether the connection for transmitting and receiving the data with the satellite is established in a state in which the second screen is displayed.

For example, each of the first screen, the second screen, and the third screen may be referred to as a user interface (UI) for the software application.

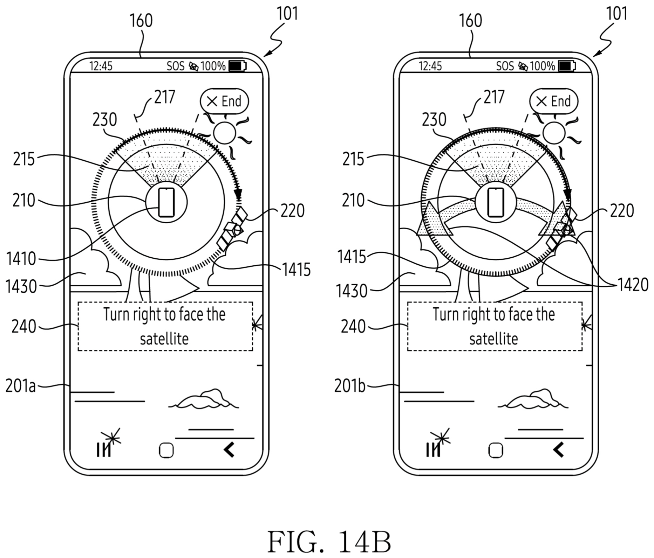

FIGS. 14A and 14B illustrate an example of a first screen displayed by an electronic device.

A first screen 201a and a first screen 201b of FIGS. 14A and 14B illustrate another example of the first screen 201 of FIG. 2, the first screen 201 (or the first screen 201-1) of FIGS. 8A to 8C. In other words, for the first screen 201a and the first screen 201b, the content with respect to the first screen 201 (or the first screen 201-1) may be applied substantially the same. The same reference numbers may be used for the same description.

Referring to FIG. 14A, an electronic device 101 may display the first screen 201a. For example, the electronic device 101 may display the first screen 201a through a display (e.g., the display module 160 of FIG. 1).

According to an embodiment, the electronic device 101 may display the first screen 201a based on identifying that the azimuth angle is outside a first range 217. For example, the first screen 201a may represent a screen for adjusting the azimuth angle outside the first range 217 to be located within the first range 217. For example, the first screen 201a may include a visual object 210 representing a reference position. For example, the first screen 201a may include a visual object 215 extending from the reference position and representing a designated range including the first range 217. For example, the first range 217 may represent a virtual area included in the designated range and is not displayed on the first screen 201a. However, an embodiment of the present disclosure is not limited thereto. For example, the visual object 215 may further include another visual object representing the first range 217. For example, the first screen 201a may include a visual object 220 representing the relative position of the satellite with respect to the electronic device 101. For example, the first screen 201a may include a visual object 230 including an area of the designated range and extending to the visual object 220 within a circle in which the visual object 220 moves. For example, the first screen 201a may include a visual object 240 including text for guiding movement in the direction. In an example of FIG. 14A, the visual object 240 of the first screen 201a may include the text (e.g., Turn right to face the satellite) indicating to rotate to the right (or clockwise).

According to an embodiment, the first screen 201a may include a visual object 1410 for representing that the azimuth angle is outside the first range 217. For example, the visual object 1410 may be displayed in the visual object 210 for representing the reference position. For example, the visual object 1410 may include an image that simplifies and displays the electronic device 101 and a background color expressed in a first color. For example, the first color may include white. However, the embodiment of the present disclosure is not limited thereto. For example, the image and the first color may be used to represent that the azimuth angle is outside the first range 217.

According to an embodiment, the first screen 201a may include a visual object 1415 for representing an entire range with respect to the azimuth angle. For example, the visual object 1415 may represent the circle in which the visual object 220 moves. For example, the visual object 1415 may be defined as 0° to 360°, which is a range in which the azimuth angle is changeable.

Referring to FIG. 14A, the electronic device 101 may display the first screen 201b. For example, the electronic device 101 may display the first screen 201b through the display (e.g., the display module 160 of FIG. 1).

According to an embodiment, the first screen 201b may include at least a portion of the first screen 201a. For example, the first screen 201b may include the visual object 1410. For example, the first screen 201b may include the visual object 1415.

According to an embodiment, the first screen 201b may further display a visual object 1420 for guiding to adjust the azimuth angle within the first range 217. For example, the electronic device 101 may display the visual object 1420 in response to identifying that the azimuth angle is adjusted by the user of the electronic device 101 in a state in which the first screen 201a (or the first screen 201, the first screen 201-1) is displayed. In FIG. 14A, an example in which the visual object 1420 including both indicators indicating right (or clockwise) and left (or counterclockwise) is displayed is illustrated, but this is only for convenience of explanation. In an example of FIG. 14A, the visual object 1420 may include only an indicator indicating the right (or clockwise) to adjust the azimuth angle to within the first range 217.

Referring to FIG. 14B, the electronic device 101 may display the first screen 201a or the first screen 201b. For example, the electronic device 101 may display the first screen 201a through the display (e.g., the display module 160 of FIG. 1). The first screen 201a and the first screen 201b of FIG. 14B may correspond to the first screen 201a and the first screen 201b of FIG. 14A, respectively.

Referring to FIG. 14B, the electronic device 101 may display the first screen 201a (or the first screen 201b) including a background screen 1430 representing an image with respect to an external environment that may be obtained through a camera (e.g., the camera module 180 of FIG. 1). According to an embodiment, the electronic device 101 may obtain the image with respect to the external environment through the camera in a state in which the first screen 201a (or the first screen 201b) is displayed. For example, the electronic device 101 may display the background screen 1430 of the first screen 201a (or the first screen 201b) as the image. Accordingly, the user of the electronic device 101 may safely perform the adjustment by visually identifying the external environment in a process of adjusting the azimuth angle within the first range 217. Alternatively, for example, in a case of storing weather information on a region in which the electronic device 101 is located, the background screen 1430 may include a visual object corresponding to the weather information. In this case, the weather information may be in a state of being stored by being received through another software application (e.g., a weather application) with respect to the region.

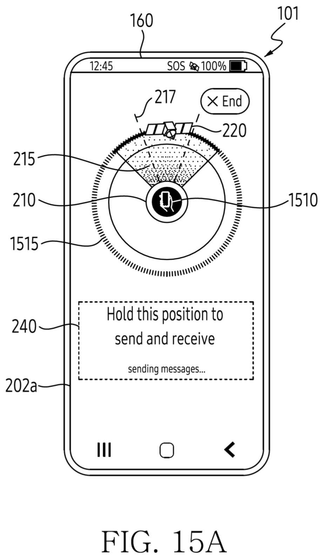

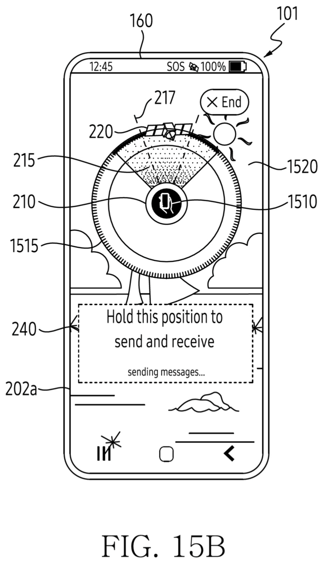

FIGS. 15A and 15B illustrate an example of a second screen displayed by an electronic device.

A second screen 202a of FIGS. 15A and 15B illustrates another example of the second screen 202 of FIG. 2, the second screen 202 of FIGS. 8A to 8C, the second screen 202 of FIG. 10A, and the second screen 202 of FIG. 11. In other words, for the second screen 202a, the content with respect to the second screen 202 may be applied substantially the same. The same reference numbers may be used for the same description.

Referring to FIG. 15A, an electronic device 101 may display the second screen 202a. For example, the electronic device 101 may display the second screen 202a through a display (e.g., the display module 160 of FIG. 1). The second screen 202a may represent a screen for guiding to hold an orientation of the electronic device 101.

According to an embodiment, the electronic device 101 may display the second screen 202a based on the azimuth angle outside the first range 217 being changed to within the first range 217 according to the movement, in a state in which the first screen 201 (or the first screen 201-1, the first screen 201a, and the first screen 201b) is displayed. For example, the electronic device 101 may display the second screen 202a changed from the first screen 201. For example, the second screen 202a may include a visual object 210 representing a reference position. For example, the second screen 202a may include a visual object 215 extending from the reference position and representing a designated range including the first range 217. For example, the first range 217 may represent a virtual area included in the designated range and not displayed on the second screen 202a. However, an embodiment of the present disclosure is not limited thereto. For example, the visual object 215 may further include another visual object representing the first range 217. For example, the second screen 202a may include a visual object 220 representing a relative position of the satellite with respect to the electronic device 101. For example, the second screen 202a may include a visual object 240 including text for guiding to hold the orientation of the electronic device 101. The orientation of the electronic device 101 may be related to the azimuth angle changed according to the movement. For example, the visual object 240 may include the text (e.g., Hold this position to send and receive) for guiding to hold the orientation. In an example of the second screen 202a, the visual object 240 may further include another text representing a transmission/reception state, together with the text for guiding to hold the orientation. For example, in the example of the second screen 202a, the visual object 240 may further include the other text (e.g., sending messages) representing that it is in the transmission state.

According to an embodiment, the second screen 202a may include a visual object 1510 for representing that the azimuth angle is within the first range 217. For example, the visual object 1510 may be displayed in the visual object 210 for representing the reference position. For example, the visual object 1510 may include an image that simplifies and displays holding the orientation of the electronic device 101, and a background color expressed in a second color. For example, the second color may represent color different from the first color of FIGS. 14A and 14B. For example, the second color may include black. However, the embodiment of the present disclosure is not limited thereto. For example, the image and the second color may be used to represent that the azimuth angle is within the first range 217.

According to an embodiment, the first screen 202a may include a visual object 1515 for representing an entire range with respect to the azimuth angle. The visual object 1515 may represent the circle in which the visual object 220 moves. For example, the visual object 1515 may be defined as 0° to 360°, which is a range in which the azimuth angle is changeable.

Referring to FIG. 15B, the electronic device 101 may display the second screen 202a. For example, the electronic device 101 may display the second screen 202a through the display (e.g., the display module 160 of FIG. 1). The second screen 202a of FIG. 15B may correspond to the second screen 202a of FIG. 15A.

Referring to FIG. 15B, the electronic device 101 may display the second screen 202a including a background screen 1520 representing an image with respect to an external environment that may be obtained through a camera (e.g., the camera module 180 of FIG. 1). According to an embodiment, the electronic device 101 may obtain the image with respect to the external environment through the camera in a state in which the second screen 202a is displayed. For example, the electronic device 101 may display the background screen 1520 of the second screen 202a as the image. Accordingly, a user of the electronic device 101 may safely perform holding the orientation by visually identifying the external environment through the background screen 1520. Alternatively, for example, in a case of storing weather information on a region in which the electronic device 101 is located, the background screen 1520 may include a visual object corresponding to the weather information. In this case, the weather information may be in a state of being stored by being received through another software application (e.g., a weather application) with respect to the region.

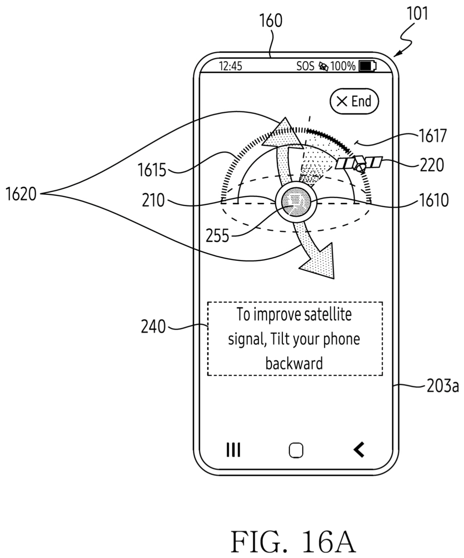

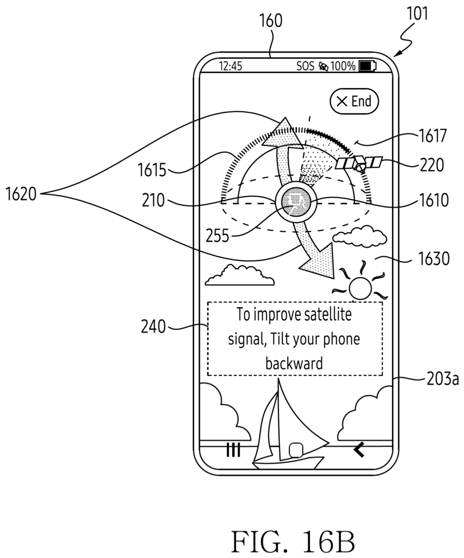

FIGS. 16A and 16B illustrate an example of a third screen displayed by an electronic device.

A third screen 203a of FIGS. 16A and 16B illustrates another example of the third screen 203 of FIG. 2, the third screen 203 of FIG. 10A, and the third screen 203 of FIG. 10B. In other words, for the third screen 203a, the content with respect to the third screen 203 may be applied substantially the same. The same reference numbers may be used for the same description.

Referring to FIG. 16A, an electronic device 101 may display the third screen 203a. For example, the electronic device 101 may display the third screen 203a through a display (e.g., the display module 160 of FIG. 1). The third screen 203a may represent a screen for adjusting the elevation angle of the electronic device 101 with respect to the satellite.

According to an embodiment, the electronic device 101 may display the third screen 203a based on identifying that the elevation angle is outside a second range 1617. For example, the electronic device 101 may display the third screen 203a changed from a second screen 202 (or a second screen 202a). For example, the third screen 203a may represent a screen for adjusting the elevation angle outside the second range 1617 to be located within the second range 1617. For example, the third screen 203a may include a visual object 210 representing a reference position. For example, the third screen 203a may include a visual object 1615 representing a range of the elevation angle based on a plane representing the azimuth angle of the electronic device 101. For example, the visual object 1615 may be formed as a hemisphere including a circle representing the plane. For example, the visual object 1615 may be defined as 0° to 180°, which is a range in which the elevation angle is changeable. For example, the third screen 203a may include the second range 1617 extending from the visual object 210 and representing a reference range with respect to the elevation angle. For example, the second range 1617 may be displayed in an area on the hemisphere. For example, the third screen 203a may include a visual object 220 indicating a relative position of the satellite. For example, the third screen 203a may include a visual object 255 for guiding a tilting direction for changing the elevation angle of the electronic device 101. For example, the visual object 255 may be displayed in the visual object 210 representing the reference position. For example, the visual object 255 may be displayed in a state of being at least partially superimposed on the visual object 210. For example, the visual object 255 for guiding the tilting direction may include an animation representing the tilting direction. For example, the tilting direction may include up-tilting for increasing the elevation angle or down-tilting for reducing the elevation angle. The third screen 203a may include a visual object 240 including text for guiding another movement of the electronic device in the tilting direction. For example, the other movement may include rotation in the tilting direction (e.g., front (or up-tilting) or backward (or down-tilting)). In an example of FIG. 16A, referring to the third screen 203a, the visual object 240 may include the text (e.g., To improve satellite signal, tilt your phone backward) for guiding the down-tilting for reducing the elevation angle.

According to an embodiment, the third screen 203a may include the visual object 255 having a background color 1610 for representing that the elevation angle is outside the second range 1617. For example, the background color 1610 may be displayed in the visual object 210 for representing the reference position. For example, the background color 1610 may be expressed in a third color. For example, the background color 1610 may be different from the first color of FIGS. 14A and 14B and the second color of FIGS. 15A and 15B. For example, the third color may include gray. However, an embodiment of the present disclosure is not limited thereto. For example, the background color 1610 expressed in the third color may be used to represent that the elevation angle is outside the second range 1617.

According to an embodiment, the third screen 203a may further display a visual object 1620 for guiding to adjust the elevation angle within the second range 1617. For example, the electronic device 101 may display the visual object 1620 in response to identifying that the elevation angle is adjusted by the user of the electronic device 101 in a state in which the third screen 203a is displayed. In FIG. 16A, an example in which the visual object 1620 including both indicators indicating the up-tilting and the down-tilting is displayed is illustrated, but this is only for convenience of explanation. In the example of FIG. 16A, the visual object 1620 may include only an indicator indicating the down-tilting to adjust the elevation angle to within the second range 1617.

Referring to FIG. 16B, the electronic device 101 may display the third screen 203a. For example, the electronic device 101 may display the third screen 203a through the display (e.g., the display module 160 of FIG. 1). The third screen 203a of FIG. 16B may correspond to the third screen 203a of FIG. 16A.

Referring to FIG. 16B, the electronic device 101 may display the third screen 203a including a background screen 1630 representing an image with respect to an external environment that may be obtained through a camera (e.g., the camera module 180 of FIG. 1). According to an embodiment, the electronic device 101 may obtain the image with respect to the external environment through the camera in a state in which the third screen 203a is displayed. For example, the electronic device 101 may display the background screen 1630 of the third screen 203a as the image. Accordingly, the user of the electronic device 101 may safely perform the adjustment by visually identifying the external environment in a process of adjusting the elevation angle within the second range 1617. Alternatively, for example, in a case of storing weather information on a region in which the electronic device 101 is located, the background screen 1630 may include a visual object corresponding to the weather information. In this case, the weather information may be in a state of being stored by being received through another software application (e.g., a weather application) with respect to the region.

Referring to the above, an electronic device and a method according to an embodiment of the present disclosure may provide a screen for adjusting the identified azimuth angle to be located within the first range. In addition, the electronic device and the method according to an embodiment of the present disclosure may provide a screen for adjusting the elevation angle to be located within the second range in a case that a connection with the satellite is not established through the azimuth angle within the first range. Accordingly, the electronic device and the method according to an embodiment of the present disclosure may improve directivity between the satellite and the electronic device by aligning a direction of an electronic device 101, in which a second direction of an antenna is considered with respect to a first direction identified through the sensor, with a position of the satellite. Additionally, the electronic device and the method according to an embodiment of the present disclosure may secure stability of the connection between the satellite and the electronic device. In the electronic device and the method according to an embodiment of the present disclosure, a user of the electronic device 101 may more intuitively obtain the directivity and the stability by displaying the screen for adjusting the azimuth angle to be located within the first range and the screen for adjusting the elevation angle to be located within the second range.

As described above, an electronic device 101 may comprise memory 130, comprising one or more storage media, storing instructions. The electronic device 101 may comprise a display 320. The electronic device 101 may comprise a communication circuit 330. The electronic device 101 may comprise at least one processor 120 comprising processing circuitry. The instructions, when executed by the at least one processor 120 individually or collectively, cause the electronic device 101 to display, via the display 320, a first screen for adjusting an azimuth angle of the electronic device 101 with respect to a satellite to be located within a first range based on identifying the azimuth angle out of the first range, in a state in which a software application for connecting with the satellite is executed via the communication circuit 330. The instructions, when executed by the at least one processor 120 individually or collectively, cause the electronic device 101 to, based on changing the azimuth angle out of the first range to within the first range in a state in which the first screen is displayed, display, via the display 320, a second screen for guiding to hold the electronic device 101, wherein the second screen is changed from the first screen. The instructions, when executed by the at least one processor 120 individually or collectively, cause the electronic device 101 to, based on identifying an elevation angle of the electronic device 101 with respect to the satellite out of a second range in a state in which the second screen is displayed, display, via the display 320, a third screen for adjusting the elevation angle to be located within the second range, wherein the third screen is changed from the second screen.

According to an embodiment, the instructions, when executed by the at least one processor 120 individually or collectively, cause the electronic device 101 to execute the software application. The instructions, when executed by the at least one processor 120 individually or collectively, cause the electronic device 101 to identify whether the azimuth angle is within the first range in a state in which the software application is executed. The instructions, when executed by the at least one processor 120 individually or collectively, cause the electronic device 101 to, in response to identifying that the azimuth angle is within the first range, display, via the display 320, the second screen. The instructions, when executed by the at least one processor 120 individually or collectively, cause the electronic device 101 to, in response to identifying that the azimuth angle is out of the first range, display, via the display 320, the first screen.

According to an embodiment, the first screen may include a visual object representing a reference position, a visual object representing a designated range including the first range, the designated range being extended from the reference position, a visual object, which is located out of the designated range, representing a relative position of the satellite with respect to the electronic device 101, a visual object indicating a direction for changing the relative position of the satellite to the designated range, and a visual object including text for guiding movement in the direction.

According to an embodiment, the instructions, when executed by the at least one processor 120 individually or collectively, cause the electronic device 101 to display, via the display 320, the first screen further including a visual object representing that the azimuth angle is within the designated range, which is at least partially superimposed on the visual object representing the reference position in response to identifying that the azimuth angle changed according to the movement is within the designated range and is out of the first range. The instructions, when executed by the at least one processor 120 individually or collectively, cause the electronic device 101 to display, via the display 320, the second screen changed from the first screen in response to identifying that the azimuth angle changed according to the movement is within the first range. The second screen may include a visual object representing the reference position, a visual object representing the designated range including the first range, the designated range being extended from the reference position, a visual object, which is located within the first range of the designated range, representing the relative position of the satellite with respect to the electronic device 101, and a visual object including another text for guiding to hold an orientation of the electronic device 101.

According to an embodiment, the second screen may be displayed through a user interface of the software application, or may be popped up in a state in which the software application is executed within a background.

According to an embodiment, the visual object representing the designated range including the first range of the first screen may be displayed with a first brightness in response to the azimuth angle out of the first range. The visual object representing the designated range including the first range of the first screen may be displayed with a second brightness being brighter than the first brightness in response to the azimuth angle out of the first range and within the designated range. The visual object representing the designated range including the first range of the second screen may be displayed with a third brightness being brighter than the second brightness in response to the azimuth angle within the first range.

According to an embodiment, the instructions, when executed by the at least one processor 120 individually or collectively, cause the electronic device 101 to identify whether a connection for transmitting or receiving data with the satellite is established, via the communication circuit 330 within designated time in the state in which the second screen is displayed. The instructions, when executed by the at least one processor 120 individually or collectively, cause the electronic device 101 to, in response to identifying that the connection is established, display, via the display 320, a fourth screen, changed from the second screen, including a visual object representing the data transmitted or received. The instructions, when executed by the at least one processor 120 individually or collectively, cause the electronic device 101 to, in response to identifying that the connection is not established, identify whether the elevation angle is within the second range.

According to an embodiment, the instructions, when executed by the at least one processor 120 individually or collectively, cause the electronic device 101 to identify whether the elevation angle is within the second range in the state in which the second screen is displayed. The instructions, when executed by the at least one processor 120 individually or collectively, cause the electronic device 101 to display, via the display 320, the third screen changed from the second screen in response to identifying that the elevation angle is out of the second range. The instructions, when executed by the at least one processor 120 individually or collectively, cause the electronic device 101 to display, via the display 320, the second screen changed from the third screen based on a change of the elevation angle out of the second range to within the second range according to tilting of the electronic device 101 in a state in which the third screen is displayed.

According to an embodiment, the instructions, when executed by the at least one processor 120 individually or collectively, cause the electronic device 101 to, in a state in which the second screen changed from the third screen is displayed, identify whether a length between a first value and a second value within the first range is shorter than a reference length. The instructions, when executed by the at least one processor 120 individually or collectively, cause the electronic device 101 to, in response to identifying the length being shorter than the reference length, display, via the display 320, a visual object for notifying a failure of the connection with the satellite, wherein the visual object is floated in a state at least partially superimposed on the third screen. The instructions, when executed by the at least one processor 120 individually or collectively, cause the electronic device 101 to, in response to identifying the length being longer than or equal to the reference length, change the first range for the azimuth angle to a third range having another length being shorter than the length.

According to an embodiment, the third screen may include a visual object representing the reference position, a visual object representing a designated range including the first range, the designated range being extended from the reference position, a visual object, which is located within the first range, representing a relative position of the satellite with respect to the electronic device 101, a visual object, which is displayed within the visual object representing the reference position, for guiding a tilting direction for changing the elevation angle of the electronic device 101, and a visual object including text for guiding another movement of the electronic device 101 in the tilting direction.

According to an embodiment, the visual object for guiding the tilting direction may include, in a case that the elevation angle is smaller than a third value of the second range, an animation for guiding up-tilting for increasing the elevation angle. The visual object for guiding the tilting direction may include, in a case that the elevation angle is larger than or equal to a fourth value of the second range, an animation for guiding down-tilting for reducing the elevation angle.

According to an embodiment, the instructions, when executed by the at least one processor 120 individually or collectively, cause the electronic device 101 to identify quality of a signal transmitted by the electronic device 101. The instructions, when executed by the at least one processor 120 individually or collectively, cause the electronic device 101 to, in response to identifying the quality of the signal being higher than or equal to reference quality, display, via the display 320, the second screen changed from the first screen. The instructions, when executed by the at least one processor 120 individually or collectively, cause the electronic device 101 to, in response to identifying the quality of the signal being lower than the reference quality, display, via the display 320, the third screen changed from the first screen.

According to an embodiment, the first range or the second range may be identified based on information associated with antennas for performing a communication with the satellite, the antenna being coupled to the communication circuit 330. The information may include at least one of the number of the antennas, directivity of the antenna, a strength of a signal radiated via the antennas, or a frequency band of the signal.

According to an embodiment, the azimuth angle may be identified based on a portion of coordinate values of a vector representing a second direction in which antennas coupled to the communication circuit 330 radiates a signal, the second direction being applied with respect to a first direction in which a sensor 310 of the electronic device 101 indicates. The elevation angle may be identified based on another portion of the coordinate values, which is different from the portion.

As described above, a method performed by an electronic device 101 may comprise displaying, via a display 320 of the electronic device 101, a first screen for adjusting an azimuth angle of the electronic device 101 with respect to a satellite to be located within a first range based on identifying the azimuth angle out of the first range, in a state in which a software application for connecting with the satellite is executed via a communication circuit 330 of the electronic device 101. The method may comprise, based on changing the azimuth angle out of the first range to within the first range in a state in which the first screen is displayed, displaying a second screen for guiding to hold the electronic device 101, wherein the second screen is changed from the first screen. The method may comprise, based on identifying an elevation angle of the electronic device 101 with respect to the satellite out of a second range in a state in which the second screen is displayed, displaying a third screen for adjusting the elevation angle to be located within the second range, wherein the third screen is changed from the second screen.

As described above, a non-transitory computer readable storage medium may store one or more programs comprising instructions to, when executed by at least one processor 120 of an electronic device 101 with a display 320 and a communication circuit 330 individually or collectively, cause the electronic device 101 to display, via the display 320, a first screen for adjusting an azimuth angle of the electronic device 101 with respect to a satellite to be located within a first range based on identifying the azimuth angle out of the first range, in a state in which a software application for connecting with the satellite is executed via the communication circuit 330 of the electronic device 101. The non-transitory computer readable storage medium may store one or more programs comprising instructions to, when executed by at least one processor 120 individually or collectively, cause the electronic device 101 to, based on changing the azimuth angle out of the first range to within the first range in a state in which the first screen is displayed, display, via the display 320, a second screen for guiding to hold the electronic device 101, wherein the second screen is changed from the first screen. The non-transitory computer readable storage medium may store one or more programs comprising instructions to, when executed by at least one processor 120 individually or collectively, cause the electronic device 101 to, based on identifying an elevation angle of the electronic device 101 with respect to the satellite out of a second range in a state in which the second screen is displayed, display, via the display 320, a third screen for adjusting the elevation angle to be located within the second range, wherein the third screen is changed from the second screen.

As described above, an electronic device 101 may comprise a display 320. The electronic device 101 may comprise a sensor 310. The electronic device 101 may comprise a communication circuit 330. The electronic device 101 may comprise a processor 120. The processor 120 may be configured to display, via the display 320, a screen for adjusting an azimuth angle of the electronic device 101 identified based on the sensor 310 with respect to a satellite to be located within a first range, in a state in which a software application for connecting with the satellite is executed via the communication circuit 330. The processor 120 may be configured to display, via the display 320, another screen for adjusting an elevation angle to be located within a second range, the other screen being changed from the screen, based on identifying that the azimuth angle out of the first range is changed to within the first range and the elevation angle of the electronic device 101 with respect to the satellite is out of the second range in a state in which the screen is displayed.

According to an embodiment, the azimuth angle may be identified based on a first coordinate and a second coordinate among coordinate values of a vector representing a second direction in which antennas coupled to the communication circuit 330 radiates a signal, the second direction being applied with respect to a first direction in which the sensor 310 indicates. The elevation angle may be identified based on a third coordinate of the coordinate values.

According to an embodiment, the first range or the second range may be identified based on information associated with antennas for performing a communication with the satellite, the antenna being coupled to the communication circuit 330. The information may include at least one of the number of the antennas, directivity of the antenna, a strength of a signal radiated via the antennas, or a frequency band of the signal.

According to an embodiment, the screen may include a visual object representing a reference position, a visual object representing a designated range including the first range, the designated range being extended from the reference position, a visual object, which is located out of the first range, representing a relative position of the satellite with respect to the electronic device 101, a visual object indicating a direction for changing the relative position of the satellite to within the designated range, and a visual object including text for guiding movement of the electronic device 101 in the direction.

According to an embodiment, the processor 120 may be configured to display, via the display 320, the screen further including a visual object representing that the azimuth angle is within the designated range, which is at least partially superimposed on the visual object representing the reference position in response to identifying that the azimuth angle according to the movement is within the designated range and is out of the first range.

According to an embodiment, the other screen may include a visual object representing the reference position, a visual object representing a designated range including the first range, the designated range being extended from the reference position, a visual object, which is located within the first range, representing a relative position of the satellite with respect to the electronic device 101, a visual object, which is displayed within the visual object representing the reference position in a state of being superimposed, for guiding a tilting direction for changing the elevation angle of the electronic device 101, and a visual object including text for guiding another movement of the electronic device 101 in the tilting direction.

As described above, a method executed by an electronic device 101 may comprise displaying, via a display 320, a screen for adjusting an azimuth angle of the electronic device 101 identified based on a sensor 310 of the electronic device 101 with respect to a satellite to be located within a first range, in a state in which a software application for connecting with the satellite is executed via a communication circuit 330 of the electronic device 101. The method may comprise displaying, via the display 320, another screen for adjusting an elevation angle to be located within a second range, the other screen being changed from the screen, based on identifying that the azimuth angle out of the first range is changed to within the first range and the elevation angle of the electronic device 101 with respect to the satellite is out of the second range in a state in which the screen is displayed.

As described above, a non-transitory computer readable storage medium may store one or more programs comprising instructions to, when executed by a processor 120 of an electronic device 101 with a display 320, cause the electronic device 101 to display, via the display 320, a screen for adjusting an azimuth angle of the electronic device 101 identified based on a sensor 310 of the electronic device 101 with respect to a satellite to be located within a first range, in a state in which a software application for connecting with the satellite is executed via a communication circuit 330 of the electronic device 101. The non-transitory computer readable storage medium may store one or more programs comprising instructions to, when executed by the processor 120, cause the electronic device 101 to display, via the display 320, another screen for adjusting an elevation angle to be located within a second range, the other screen being changed from the screen, based on identifying that the azimuth angle out of the first range is changed to within the first range and the elevation angle of the electronic device 101 with respect to the satellite is out of the second range in a state in which the screen is displayed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101), comprising:

   memory (130), comprising one or more storage media, storing instructions;
   a display (320);
   a communication circuit (330); and
   at least one processor (120) comprising processing circuitry,
   wherein the instructions, when executed by the at least one processor (120) individually or collectively, cause the electronic device (101) to:

   display, via the display (320), a first screen for adjusting an azimuth angle of the electronic device (101) with respect to a satellite to be located within a first range based on identifying the azimuth angle out of the first range, in a state in which a software application for connecting with the satellite is executed via the communication circuit (330);
   based on changing the azimuth angle out of the first range to within the first range in a state in which the first screen is displayed, display, via the display (320), a second screen for guiding to hold the electronic device (101), wherein the second screen is changed from the first screen; and
   based on identifying an elevation angle of the electronic device (101) with respect to the satellite out of a second range in a state in which the second screen is displayed, display, via the display (320), a third screen for adjusting the elevation angle to be located within the second range, wherein the third screen is changed from the second screen.

2. The electronic device (101) of claim 1,
   wherein the instructions, when executed by the at least one processor (120) individually or collectively, cause the electronic device (101) to:

   execute the software application;
   identify whether the azimuth angle is within the first range in a state in which the software application is executed;
   in response to identifying that the azimuth angle is within the first range, display, via the display (320), the second screen; and
   in response to identifying that the azimuth angle is out of the first range, display, via the display (320), the first screen.

3. The electronic device (101) of claim 1,
   wherein the first screen includes:

   a visual object representing a reference position;
   a visual object representing a designated range including the first range, the designated range being extended from the reference position;
   a visual object, which is located out of the designated range, representing a relative position of the satellite with respect to the electronic device (101);
   a visual object indicating a direction for changing the relative position of the satellite to within the designated range; and

a visual object including text for guiding movement in the direction.

4. The electronic device (101) of claim 3,
wherein the instructions, when executed by the at least one processor (120) individually or collectively, cause the electronic device (101) to:

display, via the display (320), the first screen further including a visual object representing that the azimuth angle is within the designated range, which is at least partially superimposed on the visual object representing the reference position in response to identifying that the azimuth angle changed according to the movement is within the designated range and is out of the first range; and
display, via the display (320), the second screen changed from the first screen in response to identifying that the azimuth angle changed according to the movement is within the first range,
wherein the second screen includes:

a visual object representing the reference position;
a visual object representing the designated range including the first range, the designated range being extended from the reference position;
a visual object, which is located within the first range of the designated range, representing the relative position of the satellite with respect to the electronic device (101); and
a visual object including another text for guiding to hold an orientation of the electronic device (101).

5. The electronic device (101) of claim 4,

wherein the visual object representing the designated range including the first range of the first screen is displayed with a first brightness in response to the azimuth angle out of the first range,
wherein the visual object representing the designated range including the first range of the first screen is displayed with a second brightness being brighter than the first brightness in response to the azimuth angle out of the first range and within the designated range, and
wherein the visual object representing the designated range including the first range of the second screen is displayed with a third brightness being brighter than the second brightness in response to the azimuth angle within the first range.

6. The electronic device (101) of claim 4,
wherein the instructions, when executed by the at least one processor (120) individually or collectively, cause the electronic device (101) to:

identify whether a connection for transmitting or receiving data with the satellite is established, via the communication circuit (330) within designated time in the state in which the second screen is displayed;
in response to identifying that the connection is established, display, via the display (320), a fourth screen, changed from the second screen, including a visual object representing the data transmitted or received; and
in response to identifying that the connection is not established, identify whether the elevation angle is within the second range.

7. The electronic device (101) of claim 6,
wherein the instructions, when executed by the at least one processor (120) individually or collectively, cause the electronic device (101) to:

identify whether the elevation angle is within the second range in the state in which the second screen is displayed;
display, via the display (320), the third screen changed from the second screen in response to identifying that the elevation angle is out of the second range; and
display, via the display (320), the second screen changed from the third screen based on a change of the elevation angle out of the second range to within the second range according to tilting of the electronic device (101) in a state in which the third screen is displayed.

8. The electronic device (101) of claim 7,
wherein the instructions, when executed by the at least one processor (120) individually or collectively, cause the electronic device (101) to:

in a state in which the second screen changed from the third screen is displayed, identify whether a length between a first value and a second value within the first range is shorter than a reference length;

in response to identifying the length being shorter than the reference length, display, via the display (320), a visual object for notifying a failure of the connection with the satellite, wherein the visual object is floated in a state at least partially superimposed on the third screen; and

in response to identifying the length being longer than or equal to the reference length, change the first range for the azimuth angle to a third range having another length being shorter than the length.

9. The electronic device (101) of claim 1,
wherein the third screen includes:

a visual object representing the reference position;
a visual object representing a designated range including the first range, the designated range being extended from the reference position;
a visual object, which is located within the first range, representing a relative position of the satellite with respect to the electronic device (101);
a visual object, which is displayed within the visual object representing the reference position, for guiding a tilting direction for changing the elevation angle of the electronic device (101); and
a visual object including text for guiding another movement of the electronic device (101) in the tilting direction.

10. The electronic device (101) of claim 9,
wherein the visual object for guiding the tilting direction includes:

in a case that the elevation angle is smaller than a third value of the second range, an animation for guiding up-tilting for increasing the elevation angle,
in a case that the elevation angle is larger than or equal to a fourth value of the second range, an animation for guiding down-tilting for reducing the elevation angle.

11. The electronic device (101) of claim 1,
wherein the instructions, when executed by the at least one processor (120) individually or collectively, cause the electronic device (101) to:

identify quality of a signal transmitted by the electronic device (101);
in response to identifying the quality of the signal being higher than or equal to reference quality, display, via the display (320), the second screen changed from the first screen, and
in response to identifying the quality of the signal being lower than the reference quality, display, via the display (320), the third screen changed from the first screen.

12. The electronic device (101) of claim 1,

wherein the first range or the second range are identified based on information associated with antennas for performing a communication with the satellite, the antenna being coupled to the communication circuit (330), wherein the information includes at least one of the number of the antennas, directivity of the antenna, a strength of a signal radiated via the antennas, or a frequency band of the signal.

13. The electronic device (101) of claim 1,

wherein the azimuth angle is identified based on a portion of coordinate values of a vector representing a second direction in which antennas coupled to the communication circuit (330) radiates a signal, the second direction being applied with respect to a first direction in which a sensor (310) of the electronic device (101) indicates, and
wherein the elevation angle is identified based on another portion of the coordinate values, which is different from the portion.

14. A method performed by an electronic device (101), the method comprising:

displaying a first screen for adjusting an azimuth angle of the electronic device (101) with respect to a satellite to be located within a first range based on identifying the azimuth angle out of the first range, in a state in which a software application for connecting with the satellite is executed;

based on changing the azimuth angle out of the first range to within the first range in a state in which the first screen is displayed, displaying a second screen for guiding to hold the electronic device (101), wherein the second screen is changed from the first screen; and

based on identifying an elevation angle of the electronic device (101) with respect to the satellite out of a second range in a state in which the second screen is displayed, displaying a third screen for adjusting the elevation angle to be located within the second range, wherein the third screen is changed from the second screen.

15. A non-transitory computer readable storage medium storing one or more programs, the one or more programs comprising instructions to, when executed by at least one processor of an electronic device with a display and a communication circuit, cause the electronic device to:

display, via the display (320), a first screen for adjusting an azimuth angle of the electronic device (101) with respect to a satellite to be located within a first range based on identifying the azimuth angle out of the first range, in a state in which a software application for connecting with the satellite is executed via the communication circuit (330);

based on changing the azimuth angle out of the first range to within the first range in a state in which the first screen is displayed, display, via the display (320), a second screen for guiding to hold the electronic device (101), wherein the second screen is changed from the first screen; and

based on identifying an elevation angle of the electronic device (101) with respect to the satellite out of a second range in a state in which the second screen is displayed, display, via the display (320), a third screen for adjusting the elevation angle to be located within the second range, wherein the third screen is changed from the second screen.

FIG. 1

FIG. 2

FIG. 3

FIG. 4

FIG. 5

FIG. 6A

FIG. 6B

FIG. 6C

FIG. 7A

FIG. 7B

FIG. 7C

FIG. 7D

FIG. 8A

FIG. 8B

FIG. 8C

FIG. 8D

FIG. 9

FIG. 10A

FIG. 10B

FIG. 10C

**1101**

- 12:45 SOS 100%
- × End
- 217
- 220
- 215
- 210
- 255

To improve satellite signal, Tilt your phone backward

- 240
- 203

**1102**

- 12:45 SOS 100%
- × End
- 217
- 220
- 215
- 210
- 250

Hold this position to send and receive

sending messages...

- 240
- 202

**1103**

- 12:45 SOS 100%
- 245-1
- Hold this position to send and receive
- 245
- 245-2

Emergency type
Injury

Information included
Location, Medical ID, and emergency description

Who are you breathing?
Normally

What best describes the emergency? Broken arm

- 1130
- 204

**1104**

- 12:45 SOS 100%
- × End
- 217
- 220
- 215
- 210
- 250

Hold this position to send and receive

Unable to send and receive

- 240
- 202
- 1190

FIG. 11

FIG. 12

DISPLAY FIRST SCREEN FOR ADJUSTING AZIMUTH ANGLE TO BE LOCATED WITHIN FIRST RANGE — 1310

DISPLAY SECOND SCREEN FOR GUIDING TO HOLD ELECTRONIC DEVICE — 1320

DISPLAY THIRD SCREEN FOR ADJUSTING ELEVATION ANGLE TO BE LOCATED WITHIN SECOND RANGE — 1330

FIG. 13

FIG. 14A

FIG. 14B

FIG. 15A

FIG. 15B

FIG. 16A

FIG. 16B

## INTERNATIONAL SEARCH REPORT

| | International application No. |
|---|---|
| | **PCT/KR2024/005556** |

| A. | CLASSIFICATION OF SUBJECT MATTER |
|---|---|

**G01S 19/01**(2010.01)i; **G06F 3/0481**(2013.01)i; **H04B 7/185**(2006.01)i

According to International Patent Classification (IPC) or to both national classification and IPC

| B. | FIELDS SEARCHED |
|---|---|

Minimum documentation searched (classification system followed by classification symbols)

G01S 19/01(2010.01); G01S 19/14(2010.01); G01S 19/42(2010.01); G06F 3/0488(2013.01); H04B 1/16(2006.01); H04B 7/155(2006.01); H04W 36/30(2009.01); H04W 8/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 위치(position), 방위각(azimuth angle), 고도각(elevation angle), 화면(screen)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023-034323 A1 (APPLE INC.) 09 March 2023 (2023-03-09)<br>See paragraphs [0021] and [0376]-[0413] and figures 9E-9J. | 1-12,14,15 |
| Y | | 13 |
| Y | KR 10-2017-0073118 A (DAEGU GYEONGBUK INSTITUTE OF SCIENCE AND TECHNOLOGY) 28 June 2017 (2017-06-28)<br>See paragraph [0052]. | 13 |
| A | KR 10-2005-0027895 A (HFR, INC.) 21 March 2005 (2005-03-21)<br>See paragraph [0078] and figure 6. | 1-15 |
| A | KR 10-1996-0027397 A (LG INFORMATION & COMMUNICATIONS LTD.) 22 July 1996 (1996-07-22)<br>See claim 1 and figure 1. | 1-15 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **19 August 2024** | **19 August 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2024/005556** |

| C. | DOCUMENTS CONSIDERED TO BE RELEVANT | |
|---|---|---|
| Category* | Citation of document, with indication, where appropriate, of the relevant passages | Relevant to claim No. |
| A | US 2023-0115735 A1 (NIPPON TELEGRAPH AND TELEPHONE CORPORATION) 13 April 2023 (2023-04-13)<br>See entire document. | 1-15 |

Form PCT/ISA/210 (second sheet) (July 2022)

**EP 4 707 867 A1**

| INTERNATIONAL SEARCH REPORT<br>Information on patent family members | | International application No.<br>**PCT/KR2024/005556** | |

| Patent document<br>cited in search report | Publication date<br>(day/month/year) | Patent family member(s) | Publication date<br>(day/month/year) |
|---|---|---|---|
| WO 2023-034323 A1 | 09 March 2023 | AU 2022-235630 A1 | 16 March 2023 |
| | | AU 2022-235630 B2 | 12 October 2023 |
| | | AU 2023-204622 A1 | 03 August 2023 |
| | | AU 2023-204622 B2 | 24 August 2023 |
| | | AU 2023-270278 A1 | 14 December 2023 |
| | | CN 117940887 A | 26 April 2024 |
| | | EP 4141636 A1 | 01 March 2023 |
| | | EP 4145262 A1 | 08 March 2023 |
| | | EP 4165498 A1 | 19 April 2023 |
| | | JP 2023-163122 A | 09 November 2023 |
| | | JP 2023-174486 A | 07 December 2023 |
| | | JP 2023-544465 A | 24 October 2023 |
| | | KR 10-2024-0051950 A | 22 April 2024 |
| | | US 11693529 B2 | 04 July 2023 |
| | | US 11893203 B2 | 06 February 2024 |
| | | US 2023-0063173 A1 | 02 March 2023 |
| | | US 2023-0065219 A1 | 02 March 2023 |
| | | US 2023-0066232 A1 | 02 March 2023 |
| | | US 2023-0308538 A1 | 28 September 2023 |
| | | US 2023-0328171 A1 | 12 October 2023 |
| KR 10-2017-0073118 A | 28 June 2017 | None | |
| KR 10-2005-0027895 A | 21 March 2005 | KR 10-0683906 B1 | 15 February 2007 |
| | | KR 10-2005-0027894 A | 21 March 2005 |
| | | KR 10-2005-0027896 A | 21 March 2005 |
| KR 10-1996-0027397 A | 22 July 1996 | None | |
| US 2023-0115735 A1 | 13 April 2023 | JP 7318806 B2 | 01 August 2023 |
| | | WO 2021-199218 A1 | 07 October 2021 |

Form PCT/ISA/210 (patent family annex) (July 2022)